# EUROPEAN PATENT SPECIFICATION

(11) **EP 4 522 567 B1**
(45) Date of publication and mention of the grant of the patent: **28.10.2026**
(21) Application number: 23731785.4
(22) Date of filing: 12.05.2023
(51) Int. Cl.: C02F 1/02, C02F 1/26, C02F 1/20, C02F 103/08, C02F 1/28

(54) **METHOD FOR EXTRACTING WATER FROM AN AQUEOUS SOLUTION**
VERFAHREN ZUR EXTRAKTION VON WASSER AUS EINER WÄSSRIGEN LÖSUNG
PROCÉDÉ D'EXTRACTION D'EAU D'UNE SOLUTION AQUEUSE

(30) Priority: 13.05.2022 US 202263341789 P
(43) Date of publication of application: 19.03.2025
(73) Proprietor: Ionic IP Holdings LLC, Greenville, TN 37743 (US)
(72) Inventor: ADAMSON, George W., Hamilton, New Jersey 08609 (US); MCCULLOUGH, Annie, Hamilton, New Jersey 08609 (US); HOLLEY, Robert Chris, Hamilton, New Jersey 08609 (US)
(74) Representative: Mathys & Squire
(86) International application number: PCT/US2023/021971
(87) International publication number: WO 2023/220329

(56) References cited:
- US-A- 3 088 909
- US-A1- 2013 082 003
- US-A1- 2022 017 385

## Description

### FIELD OF THE INVENVENTION

The present invention relates to a balancer and methods for extracting water from an aqueous solution.

### BACKGROUND

Potable water and water suitable for agricultural use are essential for human life. Presently, 2.3 billion people throughout the world live in water-stressed countries. Of these 2.3 billion people, about thirty-two percent (32%) live in regions that are considered highly and/or critically water-stressed.

Aqueous solutions having high levels of salinity (e.g., seawater, brackish water, and well water) represent a potential resource for addressing water scarcity issues across the globe. However, conventional systems and methods for extracting water (e.g., potable water or water suitable for agricultural use) from aqueous solutions suffer from several drawbacks. Specifically, conventional systems and methods for extracting water from aqueous solutions are inefficient and/or too costly to be practicable. Many conventional systems and methods rely on large amounts of electricity to produce potable water. Some conventional systems and methods require the transportation of aqueous solutions over long distances, thereby increasing the inefficiencies and costs associated with producing potable water. Other conventional systems produce large amounts of brine that must be disposed of or otherwise utilized, thereby increasing costs associated with water extraction. And, some conventional systems require components (e.g., filter systems) that are expensive to maintain.

As such, there remains a need to provide improved systems and methods for extracting water from aqueous solutions. Some relevant prior art documents are US 2022/017385 A1, US 3 088 909 A and US 2013/082003 A1.

### SUMMARY OF THE INVENTION

In one aspect, the present invention provides a method for extracting water from an aqueous solution comprising:
(a-1) mixing (or contacting) an extraction agent and the aqueous solution at about ambient temperature to form a first feed mixture including a wet extraction agent phase and a raffinate phase, wherein the aqueous solution comprises a concentration of sodium chloride;
(b-1) removing at least a portion of the raffinate phase from the first feed mixture;
(c-1) heating the wet extraction agent phase to a temperature of from about 35 °C to about 130 °C to form a second feed mixture including a heated extraction agent phase and a heated aqueous solution phase;
(d-1) reducing the volume of the second feed mixture to provide a balanced mixture having a volume ratio of from about 5:1 to about 1:10 of heated extraction agent phase to heated aqueous solution phase;
(e-1) reducing the temperature of the balanced mixture by at least 15 °C (e.g., from about 15 °C to about 35 °C) to form a cooled mixture including a cooled extraction agent phase and a cooled aqueous solution phase;
(f-1) removing at least a portion of the cooled aqueous solution phase from the cooled mixture to form a concentrated extraction agent mixture; and
(g-1) heating the concentrated extraction agent mixture to a temperature of from about 35 °C to about 130 °C to form a dry extraction agent phase and a water phase, wherein the water phase comprises a concentration of sodium chloride that is less than the concentration of sodium chloride in the aqueous solution.

In some implementations, the aqueous solution has a concentration of sodium chloride of greater than about 8,500 mg/L (e.g., from about 10,000 mg/L to about 50,000 mg/L, from about 15,000 mg/L to about 45,000 mg/L, from about 20,000 mg/L to about 40,000 mg/L, or from about 27,000 mg/L to about 37,000 mg/L). In some implementations, the aqueous solution comprises a concentration of sodium chloride from about 350 mg/L to about 40,000 mg/L. For example, an aqueous solution sourced from a well may comprise a concentration of sodium chloride from about 1,000 mg/L to about 10,000 mg/L.

In some implementations, step (a-1) comprises mixing (or contacting) a volume ratio of from about 5:1 to about 1:5 of extraction agent to aqueous solution. In some implementations, step (a-1) comprises mixing (or contacting) the extraction agent and the aqueous solution for a period of from about 1 second to about 5 minutes (e.g., from about 3 seconds to about 5 minutes). In some implementations, step (a-1) comprises mixing (or contacting) the extraction agent and the aqueous solution for a period of from about 30 seconds to about 2 minutes.

In some implementations, the extraction agent has a density that is less than the density of the aqueous solution. According to the invention, the extraction agent comprises a tertiary or secondary amine or salt thereof (e.g., a HCl salt thereof) having the formula N(R¹)₃, wherein each R¹ is independently hydrogen, an optionally substituted straight or branched C₁₋₂₀ alkyl (e.g., C₁₋₁₀ alkyl), an optionally substituted C₃₋₁₄ mono- or bicyclic cycloalkyl (e.g., C₃₋₁₀ mono- or bicyclic cycloalkyl), or an optionally substituted C₆₋₁₄ mono- or bicyclic aryl, wherein the alkyl, cycloalkyl, and aryl of R¹ are each optionally and independently substituted with up to two halogen or C₁₋₆ alkyl (e.g., C₁₋₃ alkyl) groups.

Alternatively, according to the invention the extraction agent comprises a di-amine or salt thereof (e.g., a HCl salt thereof) having the formula (R¹)₂N-L-N(R¹)₂ wherein L is a C₁₋₁₄ bivalent, straight or branched alkylene chain, and each R¹ is independently hydrogen, an optionally substituted straight or branched C₁₋₂₀ alkyl, an optionally substituted C₃₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups.

In some implementations, the extraction agent comprises methylamine; ethylamine; propylamine; isopropylamine; butylamine; sec-butylamine; iso-butylamine; tert-butylamine; amylamine; hexylamine; heptylamine; 1-methylhexylamine; octylamine; 1-ethylpentylamine; 2-ethylhexylamine; 2-ethylbutylamine; 2-ethyl-1-hexylamine; tert-octylamine; nonylamine; decylamine; dodecylamine; hexadecylamine; octadecylamine; dimethylamine; diethylamine; dipropylamine; di-iso-propylamine; dibutylamine; di-sec-butylamine; di-iso-butylamine; di-tert-butylamine; diisobutylamine; N,N-ethylcyclohexylamine; N-methylcyclohexylamine; N-methyl-tert-butylamine; N-methyl-iso-butylamine; N-methylpentylamine; di-allylamine; N-ethylmethylamine; N-iso-propylmethylamine; N-methylbutylamine; N-methyl-n-amylamine; N-ethyl-tert-butylamine; N-ethyl-sec-butylamine; N-ethylpropylamine; N-ethyl-iso-propylamine; N-ethyl-n-butylamine; dioctylamine; N-methyldodecylamine; propylbutylamine; N-ethylbenzylamine; 1,3-dimethylbutylamine; N,N-dimethyl-iso-propylamine; dimethylpropylamine; N,N-dimethyl-iso-butylamine; N,N-dimethyl-tert-butylamine; N,N-dimethylcyclohexylamine; N,N-dimethylethylamine; N,N-diethylmethylamine; triethylamine; di-iso-propylmethylamine; 2-(isopropylamino)ethanol; tripropylamine; trioctylamine; N,N-dimethylhexadecylamine; 1,8-diaminooctane; 1,12-diaminododecane; 1,3-dimethylamylamine; 2-aminopentane; N,N,5,5-tetramethyl-1,3-dioxan-2amine; bis[3-trimethoxysilyl)propyl]amine; octanoic acid; decanoic acid; hexanoic acid; tri-8-chlorooctylamine; trioctylamine; trioctadecylamine; or any combination thereof. And, in some embodiments, the extraction agent comprises dipropylamine; di-iso-propylamine; or any combination thereof.

In some implementations, step (b-1) comprises removing from about 50% to about 100% by volume of the raffinate phase from the first feed mixture. In other implementations, step (b-1) comprises removing from about 80% to about 100% by volume of the raffinate phase from the first feed mixture.

In some implementations, step (c-1) comprises heating the wet extraction agent phase to a temperature of from about 45 °C to about 90 °C. In other implementations, step (c-1) comprises heating the wet extraction agent phase to a temperature of from about 50 °C to about 130 °C (e.g., from about 50 °C to about 85 °C).

In some implementations, step (d-1) comprises removing a portion of the heated extraction agent phase from the second mixture to provide a balanced mixture having a volume ratio of from about 5:1 to about 1:10 of heated extraction agent phase to heated aqueous solution phase. In some implementations, step (d-1) comprises removing the portion of the heated extraction agent phase from the second feed mixture to provide a balanced mixture having a volume ratio of from about 3:1 to about 1:3 of heated extraction agent phase to heated aqueous solution phase. In other implementations, step (d-1) comprises removing a portion of the heated aqueous solution phase from the second mixture to provide a balanced mixture having a volume ratio of from about 5:1 to about 1:10 of heated extraction agent phase to heated aqueous solution phase. And, in some implementations, step (d-1) comprises detecting the volume of the heated extraction agent phase or the volume of heated aqueous solution phase.

In some implementations, step (e-1) comprises reducing the temperature of the balanced mixture to a temperature of from about 15 °C to about 35 °C to form the cooled mixture. In some implementations, step (e-1) comprises reducing the temperature of the balanced mixture to about ambient temperature to form the cooled mixture.

In some implementations, step (f-1) comprises removing from about 50% to about 100% of the cooled aqueous solution phase from the cooled mixture. In other implementations, step (f-1) comprises removing from about 75% to about 90% of the cooled aqueous solution phase from the cooled mixture.

In some implementations, step (g-1) comprises heating the concentrated extraction agent mixture to a temperature of from about 45 °C to about 90 °C. In other implementations, step (g-1) comprises heating the concentrated extraction agent mixture to a temperature of from about 50 °C to about 85 °C.

In some implementations, the concentration of sodium chloride in the water phase is from about 70% to about 99% less than the concentration of sodium chloride in the aqueous solution. For example, the concentration of sodium chloride in the water phase is from about 70% to about 90% less than the concentration of sodium chloride in the aqueous solution.

In some implementations, the method further comprises:
(h-1) treating at least a portion of the water phase to remove extraction agent. For example, step (h-1) comprises sparging, distilling, or osmotically filtering the water phase to remove extraction agent from the water phase.

In another aspect, the present disclosure provides a method of extracting water from an aqueous solution. The method (not forming part of the current invention) comprises:
(a-6) mixing an extraction agent and the aqueous solution at about ambient temperature to form a first feed mixture including a wet extraction agent phase and a raffinate phase, wherein the aqueous solution comprises a concentration of sodium chloride;
(b-6) removing from about 50% to about 100% by volume of the raffinate phase from the first feed mixture to form a concentrated wet extraction agent phase;
(c-6) heating the wet extraction agent phase to a temperature of from about 35 °C to about 130 °C to form a heated mixture including a dry extraction agent phase and a water phase, wherein the water phase comprises a concentration of sodium chloride that is less than the concentration of sodium chloride in the aqueous solution; and
(d-6) recycling at least a portion of the dry extraction agent phase for use as extraction agent in mixing step (a-6).

In some implementations, step (a-6) comprises mixing the extraction agent and the aqueous solution at a volume ratio of from about 5:1 to about 1:5. In some implementations, the aqueous solution comprises a concentration of sodium chloride of from about 300 mg/L to about 45,000 mg/L. In some implementations, the aqueous solution has a concentration of sodium chloride of greater than about 8,500 mg/L (e.g., from about 10,000 mg/L to about 50,000 mg/L, from about 15,000 mg/L to about 45,000 mg/L, from about 20,000 mg/L to about 40,000 mg/L, or from about 27,000 mg/L to about 37,000 mg/L). In some implementations, step (a-6) comprises contacting at least one stream of aqueous solution with at least one stream of extraction agent. In some implementations, step (a-6) comprises mixing the extraction agent and the aqueous solution with a rotor or shaker. And, in some implementations, step (a-6) comprises mixing the extraction agent and the aqueous solution for a period of from about 3 seconds to about 5 minutes.

In some implementations, the extraction agent has a density that is less than the density of the aqueous solution. In some implementations, the extraction agent comprises a tertiary or secondary amine having the formula N(R¹)₃, wherein each R¹ is independently hydrogen, an optionally substituted straight or branched C₁₋₂₀ alkyl, an optionally substituted C₁₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups.

In other implementations, the extraction agent comprises a di-amine having the formula (R¹)₂N-L-N(R¹)₂ wherein L is a C₁₋₁₄ bivalent, straight or branched alkylene chain, and each R¹ is independently hydrogen, an optionally substituted straight or branched C₁₋₂₀ alkyl, an optionally substituted C₁₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups.

In some embodiments, the extraction agent comprises methylamine; ethylamine; propylamine; isopropylamine; butylamine; sec-butylamine; iso-butylamine; tert-butylamine; amylamine; hexylamine; heptylamine; 1-methylhexylamine; octylamine; 1-ethylpentylamine; 2-ethylhexylamine; 2-ethylbutylamine; 2-ethyl-1-hexylamine;tert-octylamine; nonylamine; decylamine; dodecylamine; hexadecylamine; octadecylamine; dimethylamine; diethylamine; dipropylamine; di-iso-propylamine; dibutylamine; di-sec-butylamine; di-iso-butylamine; di-tert-butylamine; diisobutylamine; N,N-ethylcyclohexylamine; N-methylcyclohexylamine; N-methyl-tert-butylamine; N-methyl-iso-butylamine; N-methylpentylamine; di-allylamine; N-ethylmethylamine; N-iso-propylmethylamine; N-methylbutylamine; N-methyl-n-amylamine; N-ethyl-tert-butylamine; N-ethyl-sec-butylamine; N-ethylpropylamine; N-ethyl-iso-propylamine; N-ethyl-n-butylamine; dioctylamine; N-methyldodecylamine; propylbutylamine; N-ethylbenzylamine; 1,3-dimethylbutylamine; N,N-dimethyl-iso-propylamine; dimethylpropylamine; N,N-dimethyl-iso-butylamine; N,N-dimethyl-tert-butylamine; N,N-dimethylcyclohexylamine; N,N-dimethylethylamine; N,N-diethylmethylamine; triethylamine; di-iso-propylmethylamine; 2-(isopropylamino)ethanol; tripropylamine; trioctylamine; N,N-dimethylhexadecylamine; 1,8-diaminooctane; 1,12-diaminododecane; 1,3-dimethylamylamine; 2-aminopentane; N,N,5,5-tetramethyl-1,3-dioxan-2amine; bis[3-trimethoxysilyl)propyl]amine; octanoic acid; decanoic acid; hexanoic acid; tri-8-chlorooctylamine; trioctylamine; trioctadecylamine; or any combination thereof. And, in some embodiments, the extraction agent comprises dipropylamine; di-iso-propylamine; or any combination thereof.

In some implementations, step (b-6) comprises removing from about 80% to about 100% by volume of the raffinate phase. In some implementations, step (b-6) comprises:
(b-6a) treating at least a portion of the raffinate phase to remove extraction agent and releasing the treated raffinate into the environment.
For example, step (b-6a) comprises treating the portion of the raffinate phase by sparging or filtering with an osmotic filter. And, in some implementations, the removal of the raffinate phase in step (b-6) is performed by a pump or gravity fed outlet.

In some implementations, step (c-6) comprises heating the wet extraction agent phase to a temperature of from about 45 °C to about 90 °C. For example, step (c-6) comprises maintaining the temperature of the heated wet extraction agent phase at a temperature of from about 45 °C to about 90 °C for a period of from about 30s to about 5 min. In some implementations, the heating of step (c-6) is performed by one or more solar-powered heating elements. And, in some implementations, the water phase of step (c-6) comprises a concentration of sodium chloride that is from about 70% to about 99% less than the concentration of sodium chloride in the aqueous solution.

In some implementations, step (c-6) comprises:
(c-6a) treating at least a portion of the water phase to remove extraction agent.
For example, step (c-6a) comprises treating the portion of the water phase by sparging or filtering with an osmotic filter.

In another aspect, the present invention provides a method for extracting water from an aqueous solution. The method comprises:
(a-7) mixing a first extraction agent and the aqueous solution at about ambient temperature to form a first feed mixture including a wet extraction agent phase and a raffinate phase, wherein the aqueous solution comprises a concentration of sodium chloride;
(b-7) removing at least a portion of the raffinate phase from the first feed mixture;
(c-7) heating the wet extraction agent phase to a temperature of from about 35 °C to about 130 °C to form a second feed mixture including a heated extraction agent phase and a heated aqueous solution phase;
(d-7) removing at least a portion of the heated extraction agent phase from the second feed mixture to provide a diluted aqueous solution phase;
(e-7) mixing the diluted aqueous solution phase with a second extraction agent to form a second wet extraction agent phase and a second raffinate phase;
(f-7) removing at least a portion of the second raffinate phase to form a concentrated wet extraction agent phase;
(g-7) heating the concentrated wet extraction agent phase to a temperature of from about 35 °C to about 130 °C to form a dry extraction agent phase and a water phase; and
(h-7) recovering the water phase,
wherein the water phase has a concentration of sodium chloride that is less than the concentration of sodium chloride in the aqueous solution.

In some implementations, step (a-7) comprises mixing the first extraction agent and the aqueous solution at a volume ratio of from about 5:1 to about 1:5 of first extraction agent to aqueous solution. In other implementations, step (a-7) comprises mixing the first extraction agent and the aqueous solution for a period of from about 3 seconds to about 5 minutes. For example, step (a-7) comprises mixing the first extraction agent and the aqueous solution for a period of from about 30 seconds to about 2 minutes.

In some implementations, the first extraction agent has a density that is less than the density of the aqueous solution. In some implementations, the first extraction agent comprises a tertiary or secondary amine having the formula N(R¹)₃, wherein each R¹ is independently hydrogen, an optionally substituted straight or branched C₁₋₂₀ alkyl, an optionally substituted C₁₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups.

In other implementations, the first extraction agent comprises a di-amine having the formula (R¹)₂N-L-N(R¹)₂ wherein L is a C₁₋₁₄ bivalent, straight or branched alkylene chain, and each R¹ is independently hydrogen, an optionally substituted straight or branched C₁₋₂₀ alkyl, an optionally substituted C₁₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups.

In some embodiments, the first extraction agent comprises methylamine; ethylamine; propylamine; isopropylamine; butylamine; sec-butylamine; iso-butylamine; tert-butylamine; amylamine; hexylamine; heptylamine; 1-methylhexylamine; octylamine; 1-ethylpentylamine; 2-ethylhexylamine; 2-ethylbutylamine; 2-ethyl-1-hexylamine;tert-octylamine; nonylamine; decylamine; dodecylamine; hexadecylamine; octadecylamine; dimethylamine; diethylamine; dipropylamine; di-iso-propylamine; dibutylamine; di-sec-butylamine; di-iso-butylamine; di-tert-butylamine; diisobutylamine; N,N-ethylcyclohexylamine; N-methylcyclohexylamine; N-methyl-tert-butylamine; N-methyl-iso-butylamine; N-methylpentylamine; di-allylamine; N-ethylmethylamine; N-iso-propylmethylamine; N-methylbutylamine; N-methyl-n-amylamine; N-ethyl-tert-butylamine; N-ethyl-sec-butylamine; N-ethylpropylamine; N-ethyl-iso-propylamine; N-ethyl-n-butylamine; dioctylamine; N-methyldodecylamine; propylbutylamine; N-ethylbenzylamine; 1,3-dimethylbutylamine; N,N-dimethyl-iso-propylamine; dimethylpropylamine; N,N-dimethyl-iso-butylamine; N,N-dimethyl-tert-butylamine; N,N-dimethylcyclohexylamine; N,N-dimethylethylamine; N,N-diethylmethylamine; triethylamine; di-iso-propylmethylamine; 2-(isopropylamino)ethanol; tripropylamine; trioctylamine; N,N-dimethylhexadecylamine; 1,8-diaminooctane; 1,12-diaminododecane; 1,3-dimethylamylamine; 2-aminopentane; N,N,5,5-tetramethyl-1,3-dioxan-2amine; bis[3-trimethoxysilyl)propyl]amine; octanoic acid; decanoic acid; hexanoic acid; tri-8-chlorooctylamine; trioctylamine; trioctadecylamine; or any combination thereof. And, in some embodiments, the first extraction agent comprises dipropylamine; di-iso-propylamine; or any combination thereof.

In some implementations, the aqueous solution comprises a concentration of sodium chloride of from about 350 mg/L to about 40,000 mg/L. In some implementations, the aqueous solution has a concentration of sodium chloride of greater than about 8,500 mg/L (e.g., from about 10,000 mg/L to about 50,000 mg/L, from about 15,000 mg/L to about 45,000 mg/L, from about 20,000 mg/L to about 40,000 mg/L, or from about 27,000 mg/L to about 37,000 mg/L).

In some implementations, step (b-7) comprises removing from about 50% to about 100% by volume of the raffinate phase from the first feed mixture. For example, step (b-7) comprises removing from about 80% to about 100% by volume of the raffinate phase from the first mixture.

In some implementations, step (c-7) comprises heating the wet extraction agent phase to a temperature of from about 45 °C to about 90 °C. For example, step (c-7) comprises heating the wet extraction agent phase to a temperature of from about 50 °C to about 85 °C.

In some implementations, step (d-7) comprises:
(d-2a) recycling at least a portion of the heated extraction agent removed from the second feed mixture for use as extraction agent in mixing step (a-7).

In some implementations, step (e-7) comprises reducing the temperature of the diluted aqueous solution phase by from about 10 °C to about 60 °C prior to mixing with the second extraction agent. In some implementations, step (e-7) comprises reducing the temperature of the diluted aqueous solution phase to about ambient temperature prior to mixing with the second extraction agent.

In some implementations, step (f-7) comprises removing from about 50% to about 100% of the second raffinate phase. For example, step (f-7) comprises removing from about 75% to about 90% of the second raffinate phase.

In some implementations, step (g-7) comprises heating the concentrated wet extraction agent phase to a temperature of from about 45 °C to about 90 °C. For example, step (g-7) comprises heating the concentrated wet extraction agent phase to a temperature of from about 50 °C to about 85 °C.

In some implementations, the concentration of sodium chloride in the water phase is from about 70% to about 90% less than the concentration of sodium chloride in the aqueous solution.

In some implementations, the method further comprises:
(i-7) recycling at least a portion of the dry extraction agent phase for use as extraction agent in mixing step (a-7).

In some implementations, the method further comprises:
(j-7) treating at least a portion of the water phase to remove extraction agent.

For example, step (j-7) comprises sparging or osmotically filtering the water phase to remove extraction agent from the water phase.

Other features and advantages of the invention will be apparent from the following detailed description, figures, and from the claims.

### BRIEF DESCRIPTION OF THE DRAWINGS

The following figures are provided by way of example and are not intended to limit the scope of the claimed invention.

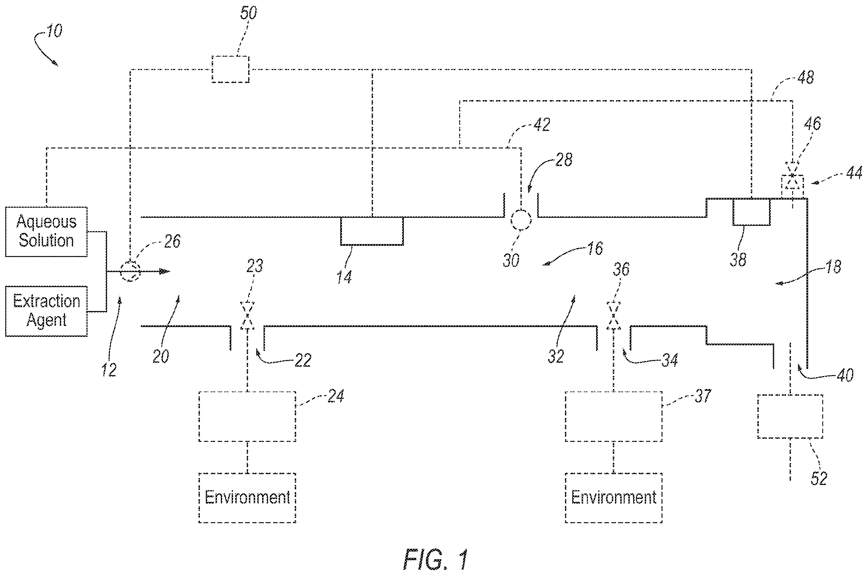

FIG. 1 is a schematic of a balancer for extracting water from an aqueous solution not forming part of the invention.

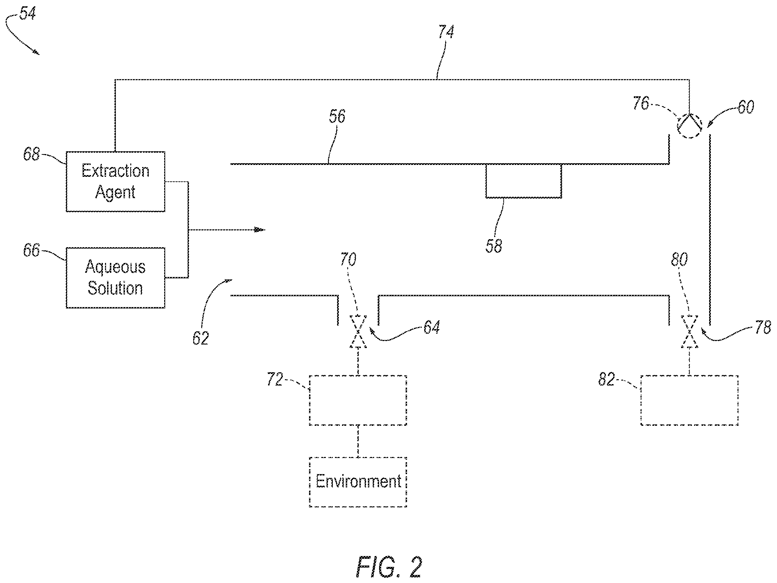

FIG. 2 is a schematic of a system for extracting water from an aqueous solution not forming part of the invention.
FIG. 3 is a flow chart of a method for extracting water from an aqueous solution according to one embodiment of the invention.
FIG. 4 is a flow chart of a method for extracting water from an aqueous solution according to another embodiment of the invention.
FIG. 5 is a flow chart of a method for extracting water from an aqueous solution according to yet another embodiment of the invention.

### DETAILED DESCRIPTION

### I. DEFINITIONS

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The terms, upper, lower, above, beneath, right, left, etc. may be used herein to describe the position of various elements with relation to other elements. These terms represent the position of elements in an example configuration. However, it will be apparent to one skilled in the art that the elements may be rotated in space without departing from the present disclosure and thus, these terms should not be used to limit the scope of the present disclosure.

As used herein, when an element is referred to as being "on," "engaged to," "connected to," "attached to," or "coupled to" another element, it may be directly on, engaged, connected, attached, or coupled to the other element, or intervening elements may be present. In contrast, when an element is referred to as being "directly on," "directly engaged to," "directly connected to," "directly attached to," or "directly coupled to" another element, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

As used herein, the term "extraction agent" refers to a material that is substantially immiscible with aqueous solutions, capable of water absorption at a first temperature (e.g., about ambient temperature), and exhibits decreased water solubility at a second temperature (e.g., about 35 °C to about 130 °C) that is higher than the first temperature. Non-limiting examples of the extraction agents include methylamine; ethylamine; propylamine; isopropylamine; butylamine; sec-butylamine; iso-butylamine; tert-butylamine; amylamine; hexylamine; heptylamine; 1-methylhexylamine; octylamine; 1-ethylpentylamine; 2-ethylhexylamine; 2-ethylbutylamine; 2-ethyl-1-hexylamine;tert-octylamine; nonylamine; decylamine; dodecylamine; hexadecylamine; octadecylamine; dimethylamine; diethylamine; dipropylamine; di-iso-propylamine; dibutylamine; di-sec-butylamine; di-iso-butylamine; di-tert-butylamine; diisobutylamine; N,N-ethylcyclohexylamine; N-methylcyclohexylamine; N-methyl-tert-butylamine; N-methyl-iso-butylamine; N-methylpentylamine; di-allylamine; N-ethylmethylamine; N-iso-propylmethylamine; N-methylbutylamine; N-methyl-n-amylamine; N-ethyl-tert-butylamine; N-ethyl-sec-butylamine; N-ethylpropylamine; N-ethyl-iso-propylamine; N-ethyl-n-butylamine; dioctylamine; N-methyldodecylamine; propylbutylamine; N-ethylbenzylamine; 1,3-dimethylbutylamine; N,N-dimethyl-iso-propylamine; dimethylpropylamine; N,N-dimethyl-iso-butylamine; N,N-dimethyl-tert-butylamine; N,N-dimethylcyclohexylamine; N,N-dimethylethylamine; N,N-diethylmethylamine; triethylamine; di-iso-propylmethylamine; 2-(isopropylamino)ethanol; tripropylamine; trioctylamine; N,N-dimethylhexadecylamine; 1,8-diaminooctane; 1,12-diaminododecane; 1,3-dimethylamylamine; 2-aminopentane; N,N,5,5-tetramethyl-1,3-dioxan-2amine; bis[3-trimethoxysilyl)propyl]amine; octanoic acid; decanoic acid; hexanoic acid; tri-8-chlorooctylamine; trioctylamine; trioctadecylamine; or any combination thereof.

As used herein, the term "aqueous solution" refers to a solution that comprises water and has a concentration of sodium chloride (i.e., sodium ions and chloride ions when sodium chloride is in solution). In some instances, the aqueous solution comprises a concentration of sodium chloride of from about 300 mg/L to about 45,000 mg/L. In some instances, the aqueous solution has a concentration of sodium chloride of greater than about 8,500 mg/L (e.g., from about 10,000 mg/L to about 50,000 mg/L, from about 15,000 mg/L to about 45,000 mg/L, from about 20,000 mg/L to about 40,000 mg/L, or from about 27,000 mg/L to about 37,000 mg/L). The aqueous solution may comprise, by way of non-limiting example, seawater; well water; brackish water; brine; or any combination thereof.

As used herein, the term "raffinate phase" refers to the aqueous phase of a biphasic mixture that forms when a mixture of extraction agent and an aqueous solution is allowed to settle (e.g., at ambient temperature). The raffinate phase has a reduced water content and an increased concentration of sodium chloride as compared to the aqueous solution due to water absorption by the extraction agent during mixing.

As used herein, the term "wet extraction agent phase" refers to a phase comprising the extraction agent after mixing with or contacting the aqueous solution. The wet extraction agent phase has increased water content as compared to the extraction agent (or dry extraction agent) due to water absorption by the extraction agent during mixing or contacting. In some embodiments, the wet extraction agent phase has a density that is less than the density of the raffinate phase.

As used herein, the term "heated extraction agent phase" refers to a phase including the extraction agent after heating the wet extraction agent phase. The heated extraction agent phase has a reduced water content as compared to the wet extraction agent phase due to the extraction agent having reduced water solubility during heating.

As used herein, the term "heated aqueous solution phase" refers to a phase including an aqueous solution after heating the wet extraction agent phase. The heated aqueous solution phase has a concentration of sodium chloride that is less than the aqueous solution and the raffinate phase. In some embodiments, the heated extraction agent phase has a density that is less than the density of the heated aqueous solution phase.

As used herein, the term "balanced mixture" refers to a mixture of the heated extraction agent phase and the heated aqueous solution phase after removing a portion of the heated extraction agent phase. The balanced mixture has a volume ratio of from about 5:1 to about 1:10 of heated extraction agent phase to heated aqueous solution phase.

As used herein, the term "ambient temperature" refers to the temperature of the aqueous solution at its source. For example, the ambient temperature of an aqueous solution, wherein the aqueous solution is sea water, is the temperature of the sea water extracted from its source (i.e., the ocean or sea). In another example, the ambient temperature of an aqueous solution, wherein the aqueous solution is well water, is the temperature of the well water extracted from its source (i.e., the well).

As used herein, the term "cooled mixture" refers to a mixture of a cooled extraction agent phase and a cooled aqueous solution phase formed after reducing the temperature of the balanced mixture by at least 15 °C.

As used herein, the term "cooled extraction agent phase" refers to a phase including the extraction agent after reducing the temperature of the balanced mixture. The cooled extraction agent phase has an increased water content as compared to the heated extraction agent phase due to water absorption by the extraction agent during cooling and/or mixing.

As used herein, the term "cooled aqueous solution phase" refers to a phase including an aqueous solution after cooling the balanced mixture. The cooled aqueous solution phase has a concentration of sodium chloride that is greater than the heated aqueous solution phase. In some embodiments, the cooled extraction agent phase has a density that is less than the density of the cooled aqueous solution phase.

As used herein, the term "concentrated extraction agent phase" refers to a phase including the cooled extraction agent phase after removing a portion of the cooled aqueous solution phase.

As used herein, the term "dry extraction agent phase" refers to a phase comprising the extraction agent after heating the concentrated extraction agent phase or concentrated wet extraction agent phase. The dry extraction agent phase has a reduced water content as compared to the concentrated extraction agent phase (or concentrated wet extraction agent phase) due to the extraction agent having reduced water solubility during heating.

As used herein, the term "water phase" refers to a phase comprising water generated from heating the concentrated extraction agent phase. In some embodiments, the water phase has a concentration of sodium chloride that is less than the aqueous solution and the heated aqueous solution phase. In some embodiments, the dry extraction agent phase has a density that is less than the density of the water phase.

As used herein, the term "diluted aqueous solution phase" refers to a phase including an aqueous solution after removing a portion of the heated extraction agent phase from the second feed mixture. In some embodiments, the diluted aqueous solution phase comprises from 0% to about 25% by volume of the heated extraction agent phase. In other embodiments, the diluted aqueous solution phase comprises from 0% to about 10% by volume of the heated extraction agent phase. And, in some embodiments, the diluted aqueous solution phase is free of the heated extraction agent phase.

As used herein, the term "second raffinate phase" refers to a phase including an aqueous solution after mixing (or contacting) the diluted aqueous solution phase with a second extraction agent. The raffinate phase has a reduced water content and an increased concentration of sodium chloride as compared to the diluted aqueous solution phase due to water absorption by the second extraction agent during mixing.

As used herein, the term "second wet extraction agent phase" refers to a phase including the second extraction agent after mixing with the diluted aqueous solution phase. The second wet extraction agent phase has increased water content as compared to the second extraction agent due to water absorption by the second extraction agent during mixing. In some embodiments, the second wet extraction agent phase has a density that is less than the density of a second raffinate phase.

As used herein, in some embodiments, the term "concentrated wet extraction agent phase" refers to a phase comprising the second wet extraction agent phase after removing at least a portion of the second raffinate phase from the second wet extraction agent phase. In some embodiments, the term "concentrated wet extraction agent phase" refers to a phase including the wet extraction agent phase after removing at least a portion of the raffinate phase from the first feed mixture. In some embodiments, the concentrated wet extraction agent phase comprises from 0% to about 25% by volume of the second raffinate phase or raffinate phase (as the case may be). In other embodiments, concentrated wet extraction agent phase comprises from 0% to about 10% by volume of the second raffinate phase or raffinate phase (as the case may be). And, in some embodiments, concentrated wet extraction agent phase is free of the second raffinate phase or raffinate phase (as the case may be).

As used herein, the term "hydroxyl" or "hydroxy" refers to an -OH moiety.

As used herein the term "aliphatic" encompasses the terms alkyl, alkenyl, and alkynyl, each of which being optionally substituted as set forth below.

As used herein, an "alkyl" group refers to a saturated aliphatic hydrocarbon group containing 1-12 (e.g., 1-8, 1-6, or 1-4) carbon atoms. An alkyl group can be straight or branched. Examples of alkyl groups include, but are not limited to, methyl, ethyl, propyl, isopropyl, butyl, isobutyl, sec-butyl, *tert*-butyl, n-pentyl, n-heptyl, or 2-ethylhexyl. An alkyl group can be substituted (i.e., optionally substituted) with one or more substituents such as halo, phospho, cycloaliphatic [e.g., cycloalkyl or cycloalkenyl], heterocycloaliphatic [e.g., heterocycloalkyl or heterocycloalkenyl], aryl, heteroaryl, alkoxy, aroyl, heteroaroyl, acyl [e.g., (aliphatic)carbonyl, (cycloaliphatic)carbonyl, or (heterocycloaliphatic)carbonyl], nitro, cyano, amido [e.g., (cycloalkylalkyl)carbonylamino, arylcarbonylamino, aralkylcarbonylamino, (heterocycloalkyl)carbonylamino, (heterocycloalkylalkyl)carbonylamino, heteroarylcarbonylamino, heteroaralkylcarbonylamino alkylaminocarbonyl, cycloalkylaminocarbonyl, heterocycloalkylaminocarbonyl, arylaminocarbonyl, or heteroarylaminocarbonyl], amino [e.g., aliphaticamino, cycloaliphaticamino, or heterocycloaliphaticamino], sulfonyl [e.g., aliphatic-SO₂-], sulfinyl, sulfanyl, sulfoxy, urea, thiourea, sulfamoyl, sulfamide, oxo, carboxy, carbamoyl, cycloaliphaticoxy, heterocycloaliphaticoxy, aryloxy, heteroaryloxy, aralkyloxy, heteroarylalkoxy, alkoxycarbonyl, alkylcarbonyloxy, or hydroxy. Without limitation, some examples of substituted alkyls include carboxyalkyl (such as HOOC-alkyl, alkoxycarbonylalkyl, and alkylcarbonyloxyalkyl), cyanoalkyl, hydroxyalkyl, alkoxyalkyl, acylalkyl, aralkyl, (alkoxyaryl)alkyl, (sulfonylamino)alkyl (such as (alkyl-SO₂-amino)alkyl), aminoalkyl, amidoalkyl, (cycloaliphatic)alkyl, or haloalkyl.

As used herein, an "alkenyl" group refers to an aliphatic carbon group that contains 2-8 (e.g., 2-12, 2-6, or 2-4) carbon atoms and at least one double bond. Like an alkyl group, an alkenyl group can be straight or branched. Examples of an alkenyl group include, but are not limited to allyl, 1- or 2-isopropenyl, 2-butenyl, and 2-hexenyl. An alkenyl group can be optionally substituted with one or more substituents such as halo, phospho, cycloaliphatic [e.g., cycloalkyl or cycloalkenyl], heterocycloaliphatic [e.g., heterocycloalkyl or heterocycloalkenyl], aryl, heteroaryl, alkoxy, aroyl, heteroaroyl, acyl [e.g., (aliphatic)carbonyl, (cycloaliphatic)carbonyl, or (heterocycloaliphatic)carbonyl], nitro, cyano, amido [e.g., (cycloalkylalkyl)carbonylamino, arylcarbonylamino, aralkylcarbonylamino, (heterocycloalkyl)carbonylamino, (heterocycloalkylalkyl)carbonylamino, heteroarylcarbonylamino, heteroaralkylcarbonylamino alkylaminocarbonyl, cycloalkylaminocarbonyl, heterocycloalkylaminocarbonyl, arylaminocarbonyl, or heteroarylaminocarbonyl], amino [e.g., aliphaticamino, cycloaliphaticamino, heterocycloaliphaticamino, or aliphaticsulfonylamino], sulfonyl [e.g., alkyl-SO₂-, cycloaliphatic-SO₂-, or aryl-SO₂-], sulfinyl, sulfanyl, sulfoxy, urea, thiourea, sulfamoyl, sulfamide, oxo, carboxy, carbamoyl, cycloaliphaticoxy, heterocycloaliphaticoxy, aryloxy, heteroaryloxy, aralkyloxy, heteroaralkoxy, alkoxycarbonyl, alkylcarbonyloxy, or hydroxy. Without limitation, some examples of substituted alkenyls include cyanoalkenyl, alkoxyalkenyl, acylalkenyl, hydroxyalkenyl, aralkenyl, (alkoxyaryl)alkenyl, (sulfonylamino)alkenyl (such as (alkyl-SO₂-amino)alkenyl), aminoalkenyl, amidoalkenyl, (cycloaliphatic)alkenyl, or haloalkenyl.

As used herein, an "alkynyl" group refers to an aliphatic carbon group that contains 2-8 (e.g., 2-12, 2-6, or 2-4) carbon atoms and has at least one triple bond. An alkynyl group can be straight or branched. Examples of an alkynyl group include, but are not limited to, propargyl and butynyl. An alkynyl group can be optionally substituted with one or more substituents such as aroyl, heteroaroyl, alkoxy, cycloalkyloxy, heterocycloalkyloxy, aryloxy, heteroaryloxy, aralkyloxy, nitro, carboxy, cyano, halo, hydroxy, sulfo, mercapto, sulfanyl [e.g., aliphaticsulfanyl or cycloaliphaticsulfanyl], sulfinyl [e.g., aliphaticsulfinyl or cycloaliphaticsulfinyl], sulfonyl [e.g., aliphatic-SO₂-, aliphaticamino-SO₂-, or cycloaliphatic-SO₂-], amido [e.g., aminocarbonyl, alkylaminocarbonyl, alkylcarbonylamino, cycloalkylaminocarbonyl, heterocycloalkylaminocarbonyl, cycloalkylcarbonylamino, arylaminocarbonyl, arylcarbonylamino, aralkylcarbonylamino, (heterocycloalkyl)carbonylamino, (cycloalkylalkyl)carbonylamino, heteroaralkylcarbonylamino, heteroarylcarbonylamino or heteroarylaminocarbonyl], urea, thiourea, sulfamoyl, sulfamide, alkoxycarbonyl, alkylcarbonyloxy, cycloaliphatic, heterocycloaliphatic, aryl, heteroaryl, acyl [e.g., (cycloaliphatic)carbonyl or (heterocycloaliphatic)carbonyl], amino [e.g., aliphaticamino], sulfoxy, oxo, carboxy, carbamoyl, (cycloaliphatic)oxy, (heterocycloaliphatic)oxy, or (heteroaryl)alkoxy.

As used herein, an "amido" encompasses both "aminocarbonyl" and "carbonylamino." These terms when used alone or in connection with another group refer to an amido group such as -N(R^{X})-C(O)-R^{Y} or -C(O)-N(R^{X})₂, when used terminally, and -C(O)-N(R^{X})- or - N(R^{X})-C(O)- when used internally, wherein R^{X} and R^{Y} can be aliphatic, cycloaliphatic, aryl, araliphatic, heterocycloaliphatic, heteroaryl or heteroaraliphatic. Examples of amido groups include alkylamido (such as alkylcarbonylamino or alkylaminocarbonyl), (heterocycloaliphatic)amido, (heteroaralkyl)amido, (heteroaryl)amido, (heterocycloalkyl)alkylamido, arylamido, aralkylamido, (cycloalkyl)alkylamido, or cycloalkylamido.

As used herein, an "amino" group refers to -NR^{X}R^{Y} wherein each of R^{X} and R^{Y} is independently hydrogen, aliphatic, cycloaliphatic, (cycloaliphatic)aliphatic, aryl, araliphatic, heterocycloaliphatic, (heterocycloaliphatic)aliphatic, heteroaryl, carboxy, sulfanyl, sulfinyl, sulfonyl, (aliphatic)carbonyl, (cycloaliphatic)carbonyl, ((cycloaliphatic)aliphatic)carbonyl, arylcarbonyl, (araliphatic)carbonyl, (heterocycloaliphatic)carbonyl, ((heterocycloaliphatic)aliphatic)carbonyl, (heteroaryl)carbonyl, or (heteroaraliphatic)carbonyl, each of which being defined herein and being optionally substituted. Examples of amino groups include alkylamino, dialkylamino, or arylamino. When the term "amino" is not the terminal group (e.g., alkylcarbonylamino), it is represented by -NR^{X}-, where R^{X} has the same meaning as defined above.

As used herein, an "aryl" group used alone or as part of a larger moiety as in "aralkyl," "aralkoxy," or "aryloxyalkyl" refers to monocyclic (e.g., phenyl); bicyclic (e.g., indenyl, naphthalenyl, tetrahydronaphthyl, tetrahydroindenyl); and tricyclic (e.g., fluorenyl tetrahydrofluorenyl, or tetrahydroanthracenyl, anthracenyl) ring systems in which the monocyclic ring system is aromatic or at least one of the rings in a bicyclic or tricyclic ring system is aromatic. The bicyclic and tricyclic groups include benzofused 2-3 membered carbocyclic rings. For example, a benzofused group includes phenyl fused with two or more C₄₋₈ carbocyclic moieties. An aryl is optionally substituted with one or more substituents including aliphatic [e.g., alkyl, alkenyl, or alkynyl]; cycloaliphatic; (cycloaliphatic)aliphatic; heterocycloaliphatic; (heterocycloaliphatic)aliphatic; aryl; heteroaryl; alkoxy; (cycloaliphatic)oxy; (heterocycloaliphatic)oxy; aryloxy; heteroaryloxy; (araliphatic)oxy; (heteroaraliphatic)oxy; aroyl; heteroaroyl; amino; oxo (on a non-aromatic carbocyclic ring of a benzofused bicyclic or tricyclic aryl); nitro; carboxy; amido; acyl [e.g., (aliphatic)carbonyl; (cycloaliphatic)carbonyl; ((cycloaliphatic)aliphatic)carbonyl; (araliphatic)carbonyl; (heterocycloaliphatic)carbonyl; ((heterocycloaliphatic)aliphatic)carbonyl; or (heteroaraliphatic)carbonyl]; sulfonyl [e.g., aliphatic-SO₂- or amino-SO₂-]; sulfinyl [e.g., aliphatic-S(O)- or cycloaliphatic-S(O)-]; sulfanyl [e.g., aliphatic-S-]; cyano; halo; hydroxy; mercapto; sulfoxy; urea; thiourea; sulfamoyl; sulfamide; or carbamoyl. Alternatively, an aryl can be unsubstituted.

Non-limiting examples of substituted aryls include haloaryl [e.g., mono-, di (such as *p*,*m*-dihaloaryl), and (trihalo)aryl]; (carboxy)aryl [e.g., (alkoxycarbonyl)aryl, ((aralkyl)carbonyloxy)aryl, and (alkoxycarbonyl)aryl]; (amido)aryl [e.g., (aminocarbonyl)aryl, (((alkylamino)alkyl)aminocarbonyl)aryl, (alkylcarbonyl)aminoaryl, (arylaminocarbonyl)aryl, and (((heteroaryl)amino)carbonyl)aryl]; aminoaryl [e.g., ((alkylsulfonyl)amino)aryl or ((dialkyl)amino)aryl]; (cyanoalkyl)aryl; (alkoxy)aryl; (sulfamoyl)aryl [e.g., (aminosulfonyl)aryl]; (alkylsulfonyl)aryl; (cyano)aryl; (hydroxyalkyl)aryl; ((alkoxy)alkyl)aryl; (hydroxy)aryl, ((carboxy)alkyl)aryl; (((dialkyl)amino)alkyl)aryl; (nitroalkyl)aryl; (((alkylsulfonyl)amino)alkyl)aryl; ((heterocycloaliphatic)carbonyl)aryl; ((alkylsulfonyl)alkyl)aryl; (cyanoalkyl)aryl; (hydroxyalkyl)aryl; (alkylcarbonyl)aryl; alkylaryl; (trihaloalkyl)aryl; *p*-amino-*m-*alkoxycarbonylaryl; *p*-amino-*m*-cyanoaryl; *p*-halo-*m*-aminoaryl; or (*m*-(heterocycloaliphatic)-o-(alkyl))aryl.

As used herein, an "araliphatic" such as an "aralkyl" group refers to an aliphatic group (e.g., a C₁₋₄ alkyl group) that is substituted with an aryl group. "Aliphatic," "alkyl," and "aryl" are defined herein. An example of an araliphatic such as an aralkyl group is benzyl.

As used herein, an "aralkyl" group refers to an alkyl group (e.g., a C₁₋₄ alkyl group) that is substituted with an aryl group. Both "alkyl" and "aryl" have been defined above. An example of an aralkyl group is benzyl. An aralkyl is optionally substituted with one or more substituents such as aliphatic [e.g., alkyl, alkenyl, or alkynyl, including carboxyalkyl, hydroxyalkyl, or haloalkyl such as trifluoromethyl], cycloaliphatic [e.g., cycloalkyl or cycloalkenyl], (cycloalkyl)alkyl, heterocycloalkyl, (heterocycloalkyl)alkyl, aryl, heteroaryl, alkoxy, cycloalkyloxy, heterocycloalkyloxy, aryloxy, heteroaryloxy, aralkyloxy, heteroaralkyloxy, aroyl, heteroaroyl, nitro, carboxy, alkoxycarbonyl, alkylcarbonyloxy, amido [e.g., aminocarbonyl, alkylcarbonylamino, cycloalkylcarbonylamino, (cycloalkylalkyl)carbonylamino, arylcarbonylamino, aralkylcarbonylamino, (heterocycloalkyl)carbonylamino, (heterocycloalkylalkyl)carbonylamino, heteroarylcarbonylamino, or heteroaralkylcarbonylamino], cyano, halo, hydroxy, acyl, mercapto, alkylsulfanyl, sulfoxy, urea, thiourea, sulfamoyl, sulfamide, oxo, or carbamoyl.

As used herein, a "bicyclic ring system" includes 6-12 (e.g., 8-12 or 9, 10, or 11) membered structures that form two rings, wherein the two rings have at least one atom in common (e.g., 2 atoms in common). Bicyclic ring systems include bicycloaliphatics (e.g., bicycloalkyl or bicycloalkenyl), bicycloheteroaliphatics, bicyclic aryls, and bicyclic heteroaryls.

As used herein, a "cycloaliphatic" group encompasses a "cycloalkyl" group and a "cycloalkenyl" group, each of which being optionally substituted as set forth below.

As used herein, a "cycloalkyl" group refers to a saturated carbocyclic mono- or bicyclic (fused or bridged) ring of 3-10 (e.g., 5-10) carbon atoms. Examples of cycloalkyl groups include cyclopropyl, cyclobutyl, cyclopentyl, cyclohexyl, cycloheptyl, adamantyl, norbornyl, cubyl, octahydro-indenyl, decahydro-naphthyl, bicyclo[3.2.1]octyl, bicyclo[2.2.2]octyl, bicyclo[3.3.1]nonyl, bicyclo[3.3.2.]decyl, bicyclo[2.2.2]octyl, adamantyl, or ((aminocarbonyl)cycloalkyl)cycloalkyl.

A "cycloalkenyl" group, as used herein, refers to a non-aromatic carbocyclic ring of 3-10 (e.g., 4-8) carbon atoms having one or more double bonds. Examples of cycloalkenyl groups include cyclopentenyl, 1,4-cyclohexa-di-enyl, cycloheptenyl, cyclooctenyl, hexahydro-indenyl, octahydro-naphthyl, cyclohexenyl, bicyclo[2.2.2]octenyl, or bicyclo[3.3.1]nonenyl.

A cycloalkyl or cycloalkenyl group can be optionally substituted with one or more substituents such as phospho, aliphatic [e.g., alkyl, alkenyl, or alkynyl], cycloaliphatic, (cycloaliphatic) aliphatic, heterocycloaliphatic, (heterocycloaliphatic) aliphatic, aryl, heteroaryl, alkoxy, (cycloaliphatic)oxy, (heterocycloaliphatic)oxy, aryloxy, heteroaryloxy, (araliphatic)oxy, (heteroaraliphatic)oxy, aroyl, heteroaroyl, amino, amido [e.g., (aliphatic)carbonylamino, (cycloaliphatic)carbonylamino, ((cycloaliphatic)aliphatic)carbonylamino, (aryl)carbonylamino, (araliphatic)carbonylamino, (heterocycloaliphatic)carbonylamino, ((heterocycloaliphatic)aliphatic)carbonylamino, (heteroaryl)carbonylamino, or (heteroaraliphatic)carbonylamino], nitro, carboxy [e.g., HOOC-, alkoxycarbonyl, or alkylcarbonyloxy], acyl [e.g., (cycloaliphatic)carbonyl, ((cycloaliphatic) aliphatic)carbonyl, (araliphatic)carbonyl, (heterocycloaliphatic)carbonyl, ((heterocycloaliphatic)aliphatic)carbonyl, or (heteroaraliphatic)carbonyl], cyano, halo, hydroxy, mercapto, sulfonyl [e.g., alkyl-SO₂- and aryl-SO₂-], sulfinyl [e.g., alkyl-S(O)-], sulfanyl [e.g., alkyl-S-], sulfoxy, urea, thiourea, sulfamoyl, sulfamide, oxo, or carbamoyl.

As used herein, the term "heterocycloaliphatic" encompasses heterocycloalkyl groups and heterocycloalkenyl groups, each of which being optionally substituted as set forth below.

As used herein, a "heterocycloalkyl" group refers to a 3-10 membered mono- or bicylic (fused or bridged) (e.g., 5- to 10-membered mono- or bicyclic) saturated ring structure, in which one or more of the ring atoms is a heteroatom (e.g., N, O, S, or combinations thereof). Examples of a heterocycloalkyl group include piperidyl, piperazyl, tetrahydropyranyl, tetrahydrofuryl, 1,4-dioxolanyl, 1,4-dithianyl, 1,3-dioxolanyl, oxazolidyl, isoxazolidyl, morpholinyl, thiomorpholyl, octahydrobenzofuryl, octahydrochromenyl, octahydrothiochromenyl, octahydroindolyl, octahydropyrindinyl, decahydroquinolinyl, octahydrobenzo[*b*]thiopheneyl, 2-oxa-bicyclo[2.2.2]octyl, 1-aza-bicyclo[2.2.2]octyl, 3-aza-bicyclo[3.2.1]octyl, and 2,6-dioxa-tricyclo[3.3.1.0^{3,7}]nonyl. A monocyclic heterocycloalkyl group can be fused with a phenyl moiety to form structures, such as tetrahydroisoquinoline, that would be categorized as heteroaryls.

A "heterocycloalkenyl" group, as used herein, refers to a mono- or bicylic (e.g., 5- to 10-membered mono- or bicyclic) non-aromatic ring structure having one or more double bonds, and wherein one or more of the ring atoms is a heteroatom (e.g., N, O, or S). Monocyclic and bicyclic heterocycloaliphatics are numbered according to standard chemical nomenclature.

A heterocycloalkyl or heterocycloalkenyl group can be optionally substituted with one or more substituents such as phospho, aliphatic [e.g., alkyl, alkenyl, or alkynyl], cycloaliphatic, (cycloaliphatic)aliphatic, heterocycloaliphatic, (heterocycloaliphatic)aliphatic, aryl, heteroaryl, alkoxy, (cycloaliphatic)oxy, (heterocycloaliphatic)oxy, aryloxy, heteroaryloxy, (araliphatic)oxy, (heteroaraliphatic)oxy, aroyl, heteroaroyl, amino, amido [e.g., (aliphatic)carbonylamino, (cycloaliphatic)carbonylamino, ((cycloaliphatic) aliphatic)carbonylamino, (aryl)carbonylamino, (araliphatic)carbonylamino, (heterocycloaliphatic)carbonylamino, ((heterocycloaliphatic) aliphatic)carbonylamino, (heteroaryl)carbonylamino, or (heteroaraliphatic)carbonylamino], nitro, carboxy [e.g., HOOC-, alkoxycarbonyl, or alkylcarbonyloxy], acyl [e.g., (cycloaliphatic)carbonyl, ((cycloaliphatic) aliphatic)carbonyl, (araliphatic)carbonyl, (heterocycloaliphatic)carbonyl, ((heterocycloaliphatic)aliphatic)carbonyl, or (heteroaraliphatic)carbonyl], nitro, cyano, halo, hydroxy, mercapto, sulfonyl [e.g., alkylsulfonyl or arylsulfonyl], sulfinyl [e.g., alkylsulfinyl], sulfanyl [e.g., alkylsulfanyl], sulfoxy, urea, thiourea, sulfamoyl, sulfamide, oxo, or carbamoyl.

A "heteroaryl" group, as used herein, refers to a monocyclic, bicyclic, or tricyclic ring system having 4 to 15 ring atoms wherein one or more of the ring atoms is a heteroatom (e.g., N, O, S, or combinations thereof) and in which the monocyclic ring system is aromatic or at least one of the rings in the bicyclic or tricyclic ring systems is aromatic. A heteroaryl group includes a benzofused ring system having 2 to 3 rings. For example, a benzofused group includes benzo fused with one or two 4 to 8 membered heterocycloaliphatic moieties (e.g., indolizyl, indolyl, isoindolyl, 3H-indolyl, indolinyl, benzo[*b*]furyl, benzo[*b*]thiophene-yl, quinolinyl, or isoquinolinyl). Some examples of heteroaryl are azetidinyl, pyridyl, 1H-indazolyl, furyl, pyrrolyl, thienyl, thiazolyl, oxazolyl, imidazolyl, tetrazolyl, benzofuryl, isoquinolinyl, benzthiazolyl, xanthene, thioxanthene, phenothiazine, dihydroindole, benzo[1,3]dioxole, benzo[b]furyl, benzo[b]thiophenyl, indazolyl, benzimidazolyl, benzthiazolyl, puryl, cinnolyl, quinolyl, quinazolyl, cinnolyl, phthalazyl, quinazolyl, quinoxalyl, isoquinolyl, 4H-quinolizyl, benzo-1,2,5-thiadiazolyl, or 1,8-naphthyridyl.

Without limitation, monocyclic heteroaryls include furyl, thiophene-yl, 2H-pyrrolyl, pyrrolyl, oxazolyl, thazolyl, imidazolyl, pyrazolyl, isoxazolyl, isothiazolyl, 1,3,4-thiadiazolyl, 2H-pyranyl, 4-H-pranyl, pyridyl, pyridazyl, pyrimidyl, pyrazolyl, pyrazyl, or 1,3,5-triazyl. Monocyclic heteroaryls are numbered according to standard chemical nomenclature.

Without limitation, bicyclic heteroaryls include indolizyl, indolyl, isoindolyl, 3H-indolyl, indolinyl, benzo[*b*]furyl, benzo[*b*]thiophenyl, quinolinyl, isoquinolinyl, indolizyl, isoindolyl, indolyl, benzo[*b*]furyl, bexo[*b*]thiophenyl, indazolyl, benzimidazyl, benzthiazolyl, purinyl, 4H-quinolizyl, quinolyl, isoquinolyl, cinnolyl, phthalazyl, quinazolyl, quinoxalyl, 1,8-naphthyridyl, or pteridyl. Bicyclic heteroaryls are numbered according to standard chemical nomenclature.

A heteroaryl is optionally substituted with one or more substituents such as aliphatic [e.g., alkyl, alkenyl, or alkynyl]; cycloaliphatic; (cycloaliphatic)aliphatic; heterocycloaliphatic; (heterocycloaliphatic)aliphatic; aryl; heteroaryl; alkoxy; (cycloaliphatic)oxy; (heterocycloaliphatic)oxy; aryloxy; heteroaryloxy; (araliphatic)oxy; (heteroaraliphatic)oxy; aroyl; heteroaroyl; amino; oxo (on a non-aromatic carbocyclic or heterocyclic ring of a bicyclic or tricyclic heteroaryl); carboxy; amido; acyl [ e.g., aliphaticcarbonyl; (cycloaliphatic)carbonyl; ((cycloaliphatic)aliphatic)carbonyl; (araliphatic)carbonyl; (heterocycloaliphatic)carbonyl; ((heterocycloaliphatic)aliphatic)carbonyl; or (heteroaraliphatic)carbonyl]; sulfonyl [e.g., aliphaticsulfonyl or aminosulfonyl]; sulfinyl [e.g., aliphaticsulfinyl]; sulfanyl [e.g., aliphaticsulfanyl]; nitro; cyano; halo; hydroxy; mercapto; sulfoxy; urea; thiourea; sulfamoyl; sulfamide; or carbamoyl. Alternatively, a heteroaryl can be unsubstituted.

Non-limiting examples of substituted heteroaryls include (halo)heteroaryl [e.g., mono- and di-(halo)heteroaryl]; (carboxy)heteroaryl [e.g., (alkoxycarbonyl)heteroaryl]; cyanoheteroaryl; aminoheteroaryl [e.g., ((alkylsulfonyl)amino)heteroaryl and ((dialkyl)amino)heteroaryl]; (amido)heteroaryl [e.g., aminocarbonylheteroaryl, ((alkylcarbonyl)amino)heteroaryl, ((((alkyl)amino)alkyl)aminocarbonyl)heteroaryl, (((heteroaryl)amino)carbonyl)heteroaryl, ((heterocycloaliphatic)carbonyl)heteroaryl, and ((alkylcarbonyl)amino)heteroaryl]; (cyanoalkyl)heteroaryl; (alkoxy)heteroaryl; (sulfamoyl)heteroaryl [e.g., (aminosulfonyl)heteroaryl]; (sulfonyl)heteroaryl [e.g., (alkylsulfonyl)heteroaryl]; (hydroxyalkyl)heteroaryl; (alkoxyalkyl)heteroaryl; (hydroxy)heteroaryl; ((carboxy)alkyl)heteroaryl; (((dialkyl)amino)alkyl]heteroaryl; (heterocycloaliphatic)heteroaryl; (cycloaliphatic)heteroaryl; (nitroalkyl)heteroaryl; (((alkylsulfonyl)amino)alkyl)heteroaryl; ((alkylsulfonyl)alkyl)heteroaryl; (cyanoalkyl)heteroaryl; (acyl)heteroaryl [e.g., (alkylcarbonyl)heteroaryl]; (alkyl)heteroaryl; or (haloalkyl)heteroaryl [e.g., trihaloalkylheteroaryl].

As used herein, a "heteroaraliphatic" (such as a heteroaralkyl group) refers to an aliphatic group (e.g., a C₁₋₄ alkyl group) that is substituted with a heteroaryl group. "Aliphatic," "alkyl," and "heteroaryl" have been defined above.

As used herein, a "heteroaralkyl" group refers to an alkyl group (e.g., a C₁₋₄ alkyl group) that is substituted with a heteroaryl group. Both "alkyl" and "heteroaryl" have been defined above. A heteroaralkyl is optionally substituted with one or more substituents such as alkyl (including carboxyalkyl, hydroxyalkyl, and haloalkyl such as trifluoromethyl), alkenyl, alkynyl, cycloalkyl, (cycloalkyl)alkyl, heterocycloalkyl, (heterocycloalkyl)alkyl, aryl, heteroaryl, alkoxy, cycloalkyloxy, heterocycloalkyloxy, aryloxy, heteroaryloxy, aralkyloxy, heteroaralkyloxy, aroyl, heteroaroyl, nitro, carboxy, alkoxycarbonyl, alkylcarbonyloxy, aminocarbonyl, alkylcarbonylamino, cycloalkylcarbonylamino, (cycloalkylalkyl)carbonylamino, arylcarbonylamino, aralkylcarbonylamino, (heterocycloalkyl)carbonylamino, (heterocycloalkylalkyl)carbonylamino, heteroarylcarbonylamino, heteroaralkylcarbonylamino, cyano, halo, hydroxy, acyl, mercapto, alkylsulfanyl, sulfoxy, urea, thiourea, sulfamoyl, sulfamide, oxo, or carbamoyl.

As used herein, "cyclic moiety" and "cyclic group" refer to mono-, bi-, and tri-cyclic ring systems including cycloaliphatic, heterocycloaliphatic, aryl, or heteroaryl, each of which has been previously defined.

As used herein, a "bridged bicyclic ring system" refers to a bicyclic heterocyclicalipahtic ring system or bicyclic cycloaliphatic ring system in which the rings are bridged. Examples of bridged bicyclic ring systems include, but are not limited to, adamantanyl, norbornanyl, bicyclo[3.2.1]octyl, bicyclo[2.2.2]octyl, bicyclo[3.3.1]nonyl, bicyclo[3.3.2]decyl, 2-oxabicyclo[2.2.2]octyl, 1-azabicyclo[2.2.2]octyl, 3-azabicyclo[3.2.1]octyl, and 2,6-dioxa-tricyclo[3.3.1.0^{3,7}]nonyl. A bridged bicyclic ring system can be optionally substituted with one or more substituents such as alkyl (including carboxyalkyl, hydroxyalkyl, and haloalkyl such as trifluoromethyl), alkenyl, alkynyl, cycloalkyl, (cycloalkyl)alkyl, heterocycloalkyl, (heterocycloalkyl)alkyl, aryl, heteroaryl, alkoxy, cycloalkyloxy, heterocycloalkyloxy, aryloxy, heteroaryloxy, aralkyloxy, heteroaralkyloxy, aroyl, heteroaroyl, nitro, carboxy, alkoxycarbonyl, alkylcarbonyloxy, aminocarbonyl, alkylcarbonylamino, cycloalkylcarbonylamino, (cycloalkylalkyl)carbonylamino, arylcarbonylamino, aralkylcarbonylamino, (heterocycloalkyl)carbonylamino, (heterocycloalkylalkyl)carbonylamino, heteroarylcarbonylamino, heteroaralkylcarbonylamino, cyano, halo, hydroxy, acyl, mercapto, alkylsulfanyl, sulfoxy, urea, thiourea, sulfamoyl, sulfamide, oxo, or carbamoyl.

As used herein, an "acyl" group refers to a formyl group or R^{X}-C(O)- (such as alkyl-C(O)-, also referred to as "alkylcarbonyl") where R^{X} and "alkyl" have been defined previously. Acetyl and pivaloyl are examples of acyl groups.

As used herein, an "aroyl" or "heteroaroyl" refers to an aryl-C(O)- or a heteroaryl-C(O)-. The aryl and heteroaryl portion of the aroyl or heteroaroyl is optionally substituted as previously defined.

As used herein, an "alkoxy" group refers to an alkyl-O- group where "alkyl" has been defined previously.

As used herein, a "carbamoyl" group refers to a group having the structure -O-CO-NR^{X}R^{Y} or -NR^{X}-CO-O-R^{Z}, wherein R^{X} and R^{Y} have been defined above and R^{Z} can be aliphatic, aryl, araliphatic, heterocycloaliphatic, heteroaryl, or heteroaraliphatic.

As used herein, a "carboxy" group refers to -COOH, -COOR^{X}, -OC(O)H, -OC(O)R^{X}, when used as a terminal group; or -OC(O)- or -C(O)O- when used as an internal group.

As used herein, a "haloaliphatic" group refers to an aliphatic group substituted with 1-3 halogen. For instance, the term haloalkyl includes the group -CF₃.

As used herein, a "mercapto" group refers to -SH.

As used herein, a "sulfo" group refers to -SO₃H or -SO₃R^{X} when used terminally or -S(O)₃- when used internally.

As used herein, a "sulfamide" group refers to the structure -NR^{X}-S(O)₂-NR^{Y}R^{Z} when used terminally and -NR^{X}-S(O)₂-NR^{Y}- when used internally, wherein R^{X}, R^{Y}, and R^{Z} have been defined above.

As used herein, a "sulfamoyl" group refers to the structure -O-S(O)₂-NR^{Y}R^{Z} wherein R^{Y} and R^{Z} have been defined above.

As used herein, a "sulfonamide" group refers to the structure -S(O)₂-NR^{X}R^{Y} or -NR^{X}-S(O)₂-R^{Z} when used terminally; or -S(O)₂-NR^{X}- or -NR^{X} -S(O)₂- when used internally, wherein R^{X}, R^{Y}, and R^{Z} are defined above.

As used herein a "sulfanyl" group refers to -S-R^{X} when used terminally and -S- when used internally, wherein R^{X} has been defined above. Examples of sulfanyls include aliphatic-S-, cycloaliphatic-S-, aryl-S-, or the like.

As used herein a "sulfinyl" group refers to -S(O)-R^{X} when used terminally and -S(O)-when used internally, wherein R^{X} has been defined above. Examples of sulfinyl groups include aliphatic-S(O)-, aryl-S(O)-, (cycloaliphatic(aliphatic))-S(O)-, cycloalkyl-S(O)-, heterocycloaliphatic-S(O)-, heteroaryl-S(O)-, or the like.

As used herein, a "sulfonyl" group refers to-S(O)₂-R^{X} when used terminally and - S(O)₂- when used internally, wherein R^{X} has been defined above. Examples of sulfonyl groups include aliphatic-S(O)₂-, aryl-S(O)₂-, (cycloaliphatic(aliphatic))-S(O)₂-, cycloaliphatic-S(O)₂-, heterocycloaliphatic-S(O)₂-, heteroaryl-S(O)₂-, (cycloaliphatic(amido(aliphatic)))-S(O)₂-or the like.

As used herein, a "sulfoxy" group refers to -O-S(O)-R^{X} or -S(O)-O-R^{X}, when used terminally and -O-S(O)- or -S(O)-O- when used internally, where R^{X} has been defined above.

As used herein, a "halogen" or "halo" group refers to fluorine, chlorine, bromine or iodine.

As used herein, an "alkoxycarbonyl," which is encompassed by the term carboxy, used alone or in connection with another group refers to a group such as alkyl-O-C(O)-.

As used herein, an "alkoxyalkyl" refers to an alkyl group such as alkyl-O-alkyl-, wherein alkyl has been defined above.

As used herein, a "carbonyl" refers to -C(O)-.

As used herein, an "oxo" refers to =O.

As used herein, the term "phospho" refers to phosphinates and phosphonates. Examples of phosphinates and phosphonates include -P(O)(R^{P})₂, wherein R^{P} is aliphatic, alkoxy, aryloxy, heteroaryloxy, (cycloaliphatic)oxy, (heterocycloaliphatic)oxy aryl, heteroaryl, cycloaliphatic or amino.

As used herein, an "aminoalkyl" refers to the structure (R^{X})₂N-alkyl-.

As used herein, a "cyanoalkyl" refers to the structure (NC)-alkyl-.

As used herein, a "urea" group refers to the structure -NR^{X}-CO-NR^{Y}R^{Z} and a "thiourea" group refers to the structure -NR^{X}-CS-NR^{Y}R^{Z} when used terminally and -NR^{X}-CO-NR^{Y}- or
-NR^{X}-CS-NR^{Y}- when used internally, wherein R^{X}, R^{Y}, and R^{Z} have been defined above.

As used herein, a "guanidine" group refers to the structure -N=C(N(R^{X}R^{Y}))N(R^{X}R^{Y}) or -NR^{X}-C(=NR^{X})NR^{X}R^{Y} wherein R^{X} and R^{Y} have been defined above.

As used herein, the term "amidino" group refers to the structure -C=(NR^{X})N(R^{X}R^{Y}) wherein R^{X} and R^{Y} have been defined above.

As used herein, the term "vicinal" generally refers to the placement of substituents on a group that includes two or more carbon atoms, wherein the substituents are attached to adjacent carbon atoms.

As used herein, the term "geminal" generally refers to the placement of substituents on a group that includes two or more carbon atoms, wherein the substituents are attached to the same carbon atom.

The terms "terminally" and "internally" refer to the location of a group within a substituent. A group is terminal when the group is present at the end of the substituent not further bonded to the rest of the chemical structure. Carboxyalkyl, i.e., R^{X}O(O)C-alkyl, is an example of a carboxy group used terminally. A group is internal when the group is present in the middle of a substituent of the chemical structure. Alkylcarboxy (e.g., alkyl-C(O)O- or alkyl-OC(O)-) and alkylcarboxyaryl (e.g., alkyl-C(O)O-aryl- or alkyl-O(CO)-aryl-) are examples of carboxy groups used internally.

As used herein, an "aliphatic chain" refers to a branched or straight aliphatic group (e.g., alkyl groups, alkenyl groups, or alkynyl groups). A straight aliphatic chain has the structure -[CH₂]ᵥ-, where v is 1-12. A branched aliphatic chain is a straight aliphatic chain that is substituted with one or more aliphatic groups. A branched aliphatic chain has the structure -[CQQ]ᵥ- where Q is independently a hydrogen or an aliphatic group; however, Q shall be an aliphatic group in at least one instance. The term aliphatic chain includes alkyl chains, alkenyl chains, and alkynyl chains, where alkyl, alkenyl, and alkynyl are defined above.

The phrase "optionally substituted" is used herein interchangeably with the phrase "substituted or unsubstituted."

As used herein, the term "substituted," whether preceded by the term "optionally" or not, refers generally to the replacement of hydrogen atoms in a given structure with the radical of a specified substituent. Specific substituents are described above in the definitions and below in the description of compounds and examples thereof. Unless otherwise indicated, an optionally substituted group can have a substituent at each substitutable position of the group, and when more than one position in any given structure can be substituted with more than one substituent selected from a specified group, the substituent can be either the same or different at every position. A ring substituent, such as a heterocycloalkyl, can be bound to another ring, such as a cycloalkyl, to form a spiro-bicyclic ring system, e.g., both rings share one common atom. As one of ordinary skill in the art will recognize, combinations of substituents envisioned by this invention are those combinations that result in the formation of stable or chemically feasible compounds.

### IV. METHOD FOR EXTRACTING WATER FROM AN AQUEOUS SOLUTION

In another aspect, provided herein are methods of extracting water from an aqueous solution. In some implementations, the aqueous solution has a relatively high concentration of sodium chloride dissolved therein. For example, the aqueous solution has a concentration of sodium chloride of greater than about 8,500 mg/L (e.g., from about 10,000 mg/L to about 50,000 mg/L, from about 15,000 mg/L to about 45,000 mg/L, from about 20,000 mg/L to about 40,000 mg/L, or from about 27,000 mg/L to about 37,000 mg/L).

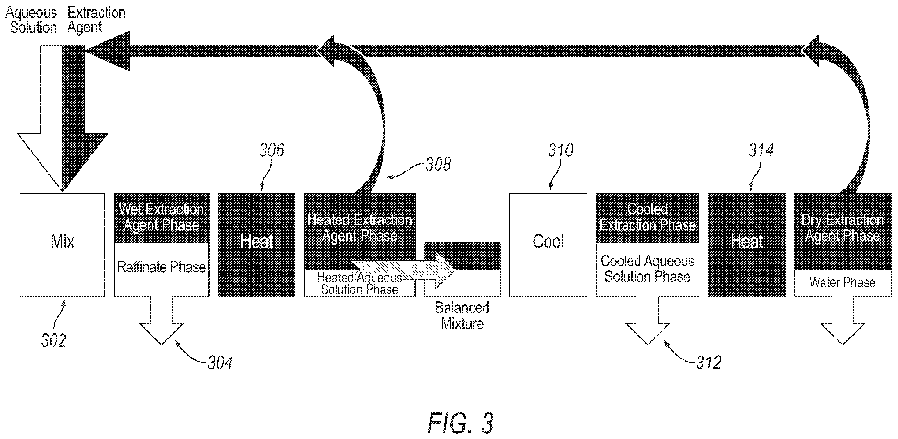

With reference to FIG. 3, a flow chart depicting an exemplary implementation of a method of extracting water from an aqueous solution is provided. The method comprises:
(a-1) mixing an extraction agent and the aqueous solution at about ambient temperature to form a first feed mixture including a wet extraction agent phase and a raffinate phase (302), wherein the aqueous solution comprises a concentration of sodium chloride;
(b-1) removing at least a portion of the raffinate phase from the first feed mixture (304);
(c-1) heating the wet extraction agent phase to a temperature of from about 35 °C to about 130 °C to form a second feed mixture including a heated extraction agent phase and a heated aqueous solution phase (306);
(d-1) reducing the volume of the second feed mixture to provide a balanced mixture having a volume ratio of from about 5:1 to about 1:10 of heated extraction agent phase to heated aqueous solution phase (308);
(e-1) reducing the temperature of the balanced mixture by at least 15 °C to form a cooled mixture including a cooled extraction agent phase and a cooled aqueous solution phase (310);
(f-1) removing at least a portion of the cooled aqueous solution phase from the cooled mixture to form a concentrated extraction agent mixture (312); and
(g-1) heating the concentrated extraction agent mixture to a temperature of from about 35 °C to about 130 °C to form a dry extraction agent phase and a water phase, wherein the water phase comprises a concentration of sodium chloride that is less than the concentration of sodium chloride in the aqueous solution (314).

In some implementations, step (a-1) comprises mixing a volume ratio of from about 5:1 to about 1:5 of extraction agent to aqueous solution. In other implementations, step (a-1) comprises mixing a volume ratio of from about 3:1 to about 1:3 of extraction agent to aqueous solution. In some implementations, step (a-1) comprises mixing a volume ratio of from about 2:1 to about 1:2 of extraction agent to aqueous solution. For example, step (a-1) comprises mixing a volume ratio of from about 1.5:1 to about 1:1.5 of extraction agent to aqueous solution. And, in some implementations, step (a-1) comprises mixing a volume ratio of about 1:1 of extraction agent to aqueous solution.

In some implementations, step (a-1) comprises mixing the extraction agent and the aqueous solution for a period of from about 1 second to about 5 minutes (e.g., from about 3 seconds to about 5 minutes, from about 30 seconds to about 3 minutes, from about 30 seconds to about 2 minutes, from about 30 seconds to about 1.5 minutes, from about 10 seconds to about 30 seconds, from about 5 seconds to about 2 minutes, from about 5 seconds to about 1.5 minutes, or about 1 minute).

In some implementations, the extraction agent has a density and the aqueous solution has a density, and the density of the extraction agent is less than the density of the aqueous solution. In other implementations, the extraction agent has a density and the aqueous solution has a density, and the density of the extraction agent is greater than the density of the aqueous solution.

The extraction agent may comprise any extraction agent as described herein. In some implementations, the extraction agent comprises a co-solvent as described herein.

The aqueous solution may be any aqueous solution as described herein. For example, the aqueous solution may be sea water or well water. The aqueous solution may have any concentration of sodium chloride as described herein. For example, the aqueous solution may comprise a concentration of sodium chloride of from about 350 mg/L to about 40,000 mg/L.

In some implementations, the aqueous solution has a concentration of sodium chloride of greater than about 8,500 mg/L. For example, the aqueous solution may have a concentration of sodium chloride of 10,000 mg/L to about 50,000 mg/L. In some implementations, the aqueous solution has a concentration of sodium chloride of 15,000 mg/L to about 45,000 mg/L. In some implementations, the aqueous solution has a concentration of sodium chloride of 20,000 mg/L to about 40,000 mg/L. In some implementations, the aqueous solution has a concentration of sodium chloride of from about 27,000 mg/L to about 37,000 mg/L.

In some implementations, step (b-1) comprises removing from about 50% to about 100% by volume of the raffinate phase from the first feed mixture. For example, step (b-1) may comprise removing from about 80% to about 100% by volume of the raffinate phase from the first feed mixture. In other implementations, step (b-1) comprises removing from about 70% to about 100% by volume of the raffinate phase from the first feed mixture. And, in some implementations, step (b-1) comprises removing about 100% by volume of the raffinate phase from the first feed mixture.

In some implementations, step (c-1) comprises heating the wet extraction agent phase to a temperature of from about 40 °C to about 110 °C (e.g., from about 45 °C to about 90 °C, from about 50 °C to about 85 °C, from about 60 °C to about 80 °C, or from about 70 °C to about 90 °C).

In some implementations, step (d-1) comprises reducing the volume of the second feed mixture to provide a balanced mixture having a volume ratio of from about 5:1 to about 1:5 of heated extraction agent phase to heated aqueous solution phase. For example, step (d-1) may comprise reducing the volume of the second feed mixture to provide a balanced mixture having a volume ratio of from about 3:1 to about 1:3 of heated extraction agent phase to heated aqueous solution phase. In some implementations, step (d-1) comprises reducing the volume of the second feed mixture to provide a balanced mixture having a volume ratio of from about 2:1 to about 1:2 of heated extraction agent phase to heated aqueous solution phase. And, in some implementations, step (d-1) comprises reducing the volume of the second feed mixture to provide a balanced mixture having a volume ratio of about 1:1.

In some implementations, as shown in FIG. 3, step (d-1) comprises removing a portion of the heated extraction agent phase from the second mixture to provide a balanced mixture having a volume ratio of from about 5:1 to about 1:10 of heated extraction agent phase to heated aqueous solution phase. In such implementations, the portion of the heated extraction agent phase removed from the second mixture may be recycled in any additional instances of step (a-1). The heated extraction agent phase may be cooled before being recycled in any additional instances of step (a-1).

In some implementations, step (d-1) comprises removing the portion of the heated extraction agent phase from the second feed mixture to provide a balanced mixture having a volume ratio of from about 5:1 to about 1:5 of heated extraction agent phase to heated aqueous solution phase. For example, step (d-1) may comprise removing the portion of the heated extraction agent phase from the second feed mixture to provide a balanced mixture having a volume ratio of from about 3:1 to about 1:3 of heated extraction agent phase to heated aqueous solution phase. In some implementations, step (d-1) comprises removing the portion of the heated extraction agent phase from the second feed mixture to provide a balanced mixture having a volume ratio of from about 2:1 to about 1:2 of heated extraction agent phase to heated aqueous solution phase. And, in some implementations, step (d-1) comprises removing the portion of the heated extraction agent phase from the second feed mixture to provide a balanced mixture having a volume ratio of about 1:1.

In some implementations, step (d-1) comprises removing a portion of the heated aqueous solution phase from the second mixture to provide a balanced mixture having a volume ratio of from about 5:1 to about 1:10 of heated extraction agent phase to heated aqueous solution phase. In such implementations, the portion of the heated aqueous solution phase removed from the second mixture may be recycled in any additional instances of step (a-1) to reduce the concentration of sodium chloride of the aqueous solution. The heated aqueous solution phase may be cooled before being recycled in any additional instances of step (a-1).

In some implementations, step (d-1) comprises removing the portion of the heated aqueous solution phase from the second mixture to provide a balanced mixture having a volume ratio of from about 5:1 to about 1:5 of heated extraction agent phase to heated aqueous solution phase. For example, step (d-1) may comprise removing the portion of the heated aqueous solution phase from the second mixture to provide a balanced mixture having a volume ratio of from about 3:1 to about 1:3 of heated extraction agent phase to heated aqueous solution phase. In some implementations, step (d-1) comprises removing the portion of the heated aqueous solution phase from the second mixture to provide a balanced mixture having a volume ratio of from about 2:1 to about 1:2 of heated extraction agent phase to heated aqueous solution phase. And, in some implementations, step (d-1) comprises removing the portion of the heated aqueous solution phase from the second mixture to provide a balanced mixture having a volume ratio of about 1:1.

In some implementations, step (d-1) comprises detecting the volume of the heated extraction agent phase or the volume of heated aqueous solution phase. Any suitable detector may be used to detect the volume of the heated extraction agent phase or the volume of heated aqueous solution phase.

In some implementations, step (e-1) comprises reducing the temperature of the balanced mixture to a temperature of from about 15 °C to about 45 °C to form the cooled mixture. For example, step (e-1) may comprise reducing the temperature of the balanced mixture to a temperature of from about 15 °C to about 35 °C to form the cooled mixture. In other implementations, step (e-1) comprises reducing the temperature of the balanced mixture to a temperature of from about 25 °C to about 45 °C to form the cooled mixture. And in some implementations, step (e-1) comprises reducing the temperature of the balanced mixture to about ambient temperature to form the cooled mixture.

In some implementations, step (e-1) comprises mixing the cooled mixture to form the cooled extraction agent phase and the cooled aqueous solution phase. For example, step (e-1) may comprise mixing the cooled mixture at ambient temperature to form the cooled extraction agent phase and the cooled aqueous solution phase. In other implementations, step (e-1) comprises mixing the cooled mixture for a period of from about 1 second to about 5 minutes (e.g., from about 3 seconds to about 5 minutes, from about 30 seconds to about 3 minutes, from about 30 seconds to about 2 minutes, from about 30 seconds to about 1.5 minutes, from about 10 seconds to about 30 seconds, from about 5 seconds to about 2 minutes, from about 5 seconds to about 1.5 minutes, or about 1 minute) to form the cooled extraction agent phase and the cooled aqueous solution phase.

In some implementations, step (f-1) comprises removing from about 50% to about 100% (e.g., from about 50% to no greater than 100%) of the cooled aqueous solution phase from the cooled mixture. For example, step (f-1) may comprise removing from about 75% to about 90% of the cooled aqueous solution phase from the cooled mixture. In other implementations, step (f-1) comprises removing from about 80% to about 100% of the cooled aqueous solution phase from the cooled mixture. In some implementations, step (f-1) comprises removing from about 70% to about 100% of the cooled aqueous solution phase from the cooled mixture. And, in some implementations, step (f-1) comprises removing about 100% of the cooled aqueous solution phase from the cooled mixture

In some implementations, step (g-1) comprises heating the concentrated extraction agent mixture to a temperature of from about 40 °C to about 110 °C (e.g., from about 45 °C to about 90 °C, from about 50 °C to about 85 °C, from about 60 °C to about 80 °C, or from about 70 °C to about 90 °C).

The water phase has a concentration of sodium chloride that is less than the concentration of sodium chloride in the aqueous solution. The water phase may have any concentration of sodium chloride as described herein. For example, the water phase may have a concentration of sodium chloride that is from about 70% to about 99% less than the concentration of sodium chloride in the aqueous solution. The water phase may have any TDS as described herein.

In some implementations, the method optionally comprises
(h-1) treating at least a portion of the water phase to remove extraction agent. For example, step (h-1) comprises sparging, distilling, or osmotically filtering the water phase to remove extraction agent from the water phase.

### A. Other Implementations

In another aspect, the present invention provides a method for extracting water from an aqueous solution. The method comprises:
(a-2) mixing an extraction agent and the aqueous solution at about ambient temperature to form a first feed mixture including a wet extraction agent phase and a raffinate phase, wherein the aqueous solution comprises a concentration of sodium chloride;
(b-2) removing at least a portion of the raffinate phase from the first feed mixture;
(c-2) heating the wet extraction agent phase to a temperature of from about 40 °C to about 110 °C to form a second feed mixture including a heated extraction agent phase and a heated aqueous solution phase;
(d-2) removing a portion of the heated extraction agent phase from the second mixture to provide a balanced mixture having a volume ratio of from about 5:1 to about 1:10 of heated extraction agent phase to heated aqueous solution phase;
(e-2) reducing the temperature of the balanced mixture by at least 15 °C to form a cooled mixture and mixing the cooled mixture to form a cooled extraction agent phase and a cooled aqueous solution phase;
(f-2) removing at least a portion of the cooled aqueous solution phase from the cooled mixture to form a concentrated extraction agent mixture; and
(g-2) heating the concentrated extraction agent mixture to a temperature of from about 40 °C to about 110 °C to form a dry extraction agent phase and a water phase, wherein the water phase comprises a concentration of sodium chloride that is less than the concentration of sodium chloride in the aqueous solution.

In another aspect, the present invention provides a method for extracting water from an aqueous solution. The method comprises:
(a-3) mixing a volume ratio of from about 5:1 to about 1:5 of an extraction agent to an aqueous solution at about ambient temperature to form a first feed mixture including a wet extraction agent phase and a raffinate phase, wherein the aqueous solution comprises a concentration of sodium chloride;
(b-3) removing at least a portion of the raffinate phase from the first feed mixture;
(c-3) heating the wet extraction agent phase to a temperature of from about 45 °C to about 90 °C to form a second feed mixture including a heated extraction agent phase and a heated aqueous solution phase;
(d-3) removing a portion of the heated extraction agent phase from the second mixture to provide a balanced mixture having a volume ratio of from about 3:1 to about 1:3 of heated extraction agent phase to heated aqueous solution phase;
(e-3) reducing the temperature of the balanced mixture to about ambient temperature to form a cooled mixture including a cooled extraction agent phase and a cooled aqueous solution phase;
(f-3) removing at least a portion of the cooled aqueous solution phase from the cooled mixture to form a concentrated extraction agent mixture; and
(g-3) heating the concentrated extraction agent mixture to a temperature of from about 45 °C to about 90 °C to form a dry extraction agent phase and a water phase, wherein the water phase comprises a concentration of sodium chloride that is less than the concentration of sodium chloride in the aqueous solution.

In another aspect, the present invention provides a method for extracting water from an aqueous solution. The method comprises:
(a-4) mixing a volume ratio of from about 5:1 to about 1:5 of an extraction agent to an aqueous solution at about ambient temperature to form a first feed mixture including a wet extraction agent phase and a raffinate phase, wherein the aqueous solution comprises a concentration of sodium chloride;
(b-4) removing at least a portion of the raffinate phase from the first feed mixture;
(c-4) heating the wet extraction agent phase to a temperature of from about 45 °C to about 90 °C to form a second feed mixture including a heated extraction agent phase and a heated aqueous solution phase;
(d-4) removing a portion of the heated extraction agent phase from the second mixture to provide a balanced mixture having a volume ratio of from about 3:1 to about 1:3 of heated extraction agent phase to heated aqueous solution phase;
(e-4) reducing the temperature of the balanced mixture by at least 15 °C to form a cooled mixture including a cooled extraction agent phase and a cooled aqueous solution phase;
(f-4) removing at least a portion of the cooled aqueous solution phase from the cooled mixture to form a concentrated extraction agent mixture; and
(g-4) heating the concentrated extraction agent mixture to a temperature of from about 45 °C to about 90 °C to form a dry extraction agent phase and a water phase, wherein the water phase comprises a concentration of sodium chloride that is from about 70% to about 99% less than the concentration of sodium chloride in the aqueous solution.

In another aspect, the present invention provides a method for extracting water from an aqueous solution. The method comprises:
(a-5) mixing an extraction agent and the aqueous solution at about ambient temperature to form a first feed mixture including a wet extraction agent phase and a raffinate phase, wherein the aqueous solution comprises a concentration of TDS;
(b-5) removing at least a portion of the raffinate phase from the first feed mixture;
(c-5) heating the wet extraction agent phase to a temperature of from about 35 °C to about 130 °C to form a second feed mixture including a heated extraction agent phase and a heated aqueous solution phase;
(d-5) removing a portion of the heated extraction agent phase from the second mixture to provide a balanced mixture having a volume ratio of from about 5:1 to about 1:10 of heated extraction agent phase to heated aqueous solution phase;
(e-5) reducing the temperature of the balanced mixture by at least 15 °C to form a cooled mixture including a cooled extraction agent phase and a cooled aqueous solution phase;
(f-5) removing at least a portion of the cooled aqueous solution phase from the cooled mixture to form a concentrated extraction agent mixture; and
(g-5) heating the concentrated extraction agent mixture to a temperature of from about 35 °C to about 130 °C to form a dry extraction agent phase and a water phase, wherein the water phase comprises a concentration of TDS that is less than the concentration of TDS in the aqueous solution.

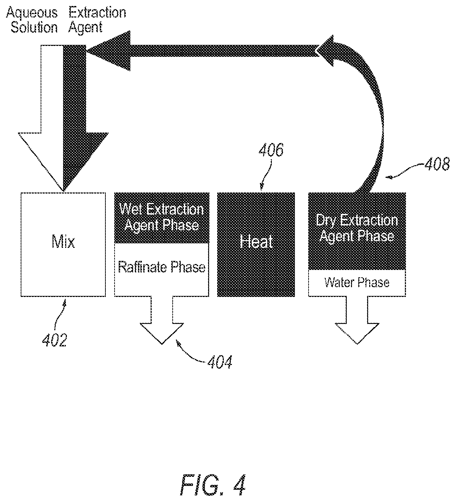

With reference to FIG. 4, a flow chart depicting another exemplary implementation of a method of extracting water from an aqueous solution is provided. The method comprises:
(a-6) mixing an extraction agent and the aqueous solution at about ambient temperature to form a first feed mixture including a wet extraction agent phase and a raffinate phase (402), wherein the aqueous solution comprises a concentration of sodium chloride;
(b-6) removing from about 50% to about 100% by volume of the raffinate phase from the first feed mixture to form a concentrated wet extraction agent phase (404);
(c-6) heating the wet extraction agent phase to a temperature of from about 35 °C to about 130 °C to form a heated mixture including a dry extraction agent phase and a water phase, wherein the water phase comprises a concentration of sodium chloride that is less than the concentration of sodium chloride in the aqueous solution (406); and
(d-6) recycling at least a portion of the dry extraction agent phase for use as extraction agent in mixing step (a-6) (408).

In some implementations, step (a-6) comprises mixing the extraction agent and the aqueous solution at a volume ratio of from about 5:1 to about 1:5. In other implementations, step (a-6) comprises mixing the extraction agent and the aqueous solution at a volume ratio of from about 3:1 to about 1:3. In some implementations, step (a-6) comprises mixing the extraction agent and the aqueous solution at a volume ratio of from about 2:1 to about 1:2. For example, step (a-6) comprises mixing the extraction agent and the aqueous solution at a volume ratio of from about 1.5:1 to about 1:1.5. And, in some implementations, step (a-6) comprises mixing the extraction agent and the aqueous solution at a volume ratio of about 1:1.

The aqueous solution may be any aqueous solution as described herein. The aqueous solution may have any concentration of sodium chloride as described herein. The aqueous solution may have any concentration of TDS as described herein.

In some implementations, step (a-6) comprises contacting at least one stream of aqueous solution with at least one stream of extraction agent. For example, step (a-6) may comprise mixing the extraction agent and the aqueous solution with a rotor or shaker. In some implementations, step (a-6) comprises mixing the extraction agent and the aqueous solution for a period of from about 1 second to about 5 minutes (e.g., from about 3 seconds to about 5 minutes, from about 30 seconds to about 3 minutes, from about 30 seconds to about 2 minutes, from about 30 seconds to about 1.5 minutes, from about 10 seconds to about 30 seconds, from about 5 seconds to about 2 minutes, from about 5 seconds to about 1.5 minutes, or about 1 minute).

In some implementations, the extraction agent has a density and the aqueous solution has a density, and the density of the extraction agent is less than the density of the aqueous solution. In other implementations, the extraction agent has a density and the aqueous solution has a density, and the density of the extraction agent is greater than the density of the aqueous solution.

The extraction agent may comprise any extraction agent as described herein. In some implementations, the extraction agent comprises a co-solvent as described herein.

In some implementations, step (b-6) comprises removing from about 80% to about 100% by volume of the raffinate phase. For example, step (b-6) may comprise removing from about 85% to about 100% by volume of the raffinate phase. In other implementations, step (b-6) comprises removing from about 80% to about 95% by volume of the raffinate phase. In other implementations, step (b-6) comprises removing from about 90% to about 100% by volume of the raffinate phase. And, in some implementations, step (b-6) comprises removing about 100% by volume of the raffinate phase.

In some implementations, step (b-6) comprises:
(b-6a) treating at least a portion of the raffinate phase to remove extraction agent and releasing the treated raffinate into the environment.
For example, step (b-6a) comprises treating the portion of the raffinate phase by sparging or filtering with an osmotic filter. In this manner, the method ensures that the raffinate phase is free, or substantially free, of the extraction agent prior to releasing the raffinate phase into the environment.

In some implementations, the removal of the raffinate phase in step (b-6) is performed by a pump or gravity fed outlet.

In some implementations, step (c-6) comprises heating the wet extraction agent phase to a temperature of from about 40 °C to about 110 °C. In some implementations, step (c-6) comprises heating the wet extraction agent phase to a temperature of from about 45 °C to about 90 °C. In other implementations, step (c-6) comprises heating the wet extraction agent phase to a temperature of from about 50 °C to about 85 °C. And, in some implementations, step (c-6) comprises heating the wet extraction agent phase to a temperature of from about 60 °C to about 80 °C.

In some implementations, step (c-6) comprises maintaining the temperature of the heated wet extraction agent phase for a period of from about 30s to about 5 min. For example, step (c-6) comprises maintaining the temperature of the heated wet extraction agent phase at a temperature of from about 45 °C to about 90 °C for a period of from about 30s to about 5 min. In other implementations, step (c-6) comprises maintaining the temperature of the heated wet extraction agent phase for a period of from about 30s to about 10 min. In some implementations, step (c-6) comprises maintaining the temperature of the heated wet extraction agent phase for a period of from about 2.5 min to about 7.5 min. And, in some implementations, step (c-6) comprises maintaining the temperature of the heated wet extraction agent phase for a period of about 5 min.

In some implementations, the heating of step (c-6) is performed by one or more solar-powered heating elements. In this manner, the method further reduces costs associated with the heating process.

The water phase has a concentration of sodium chloride that is less than the concentration of sodium chloride in the aqueous solution. The water phase may have any concentration of sodium chloride as described herein. For example, the water phase may have a concentration of sodium chloride that is from about 70% to about 99% less than the concentration of sodium chloride in the aqueous solution.

In some implementations, the water phase has a concentration of TDS. The water phase may have any concentration of TDS as described herein.

In some implementations, step (c-6) comprises:
(c-6a) treating at least a portion of the water phase to remove extraction agent. For example, step (c-6a) comprises treating the portion of the water phase by sparging or filtering with an osmotic filter. In this manner, the method ensures that the water phase is free, or substantially free, of the extraction agent.

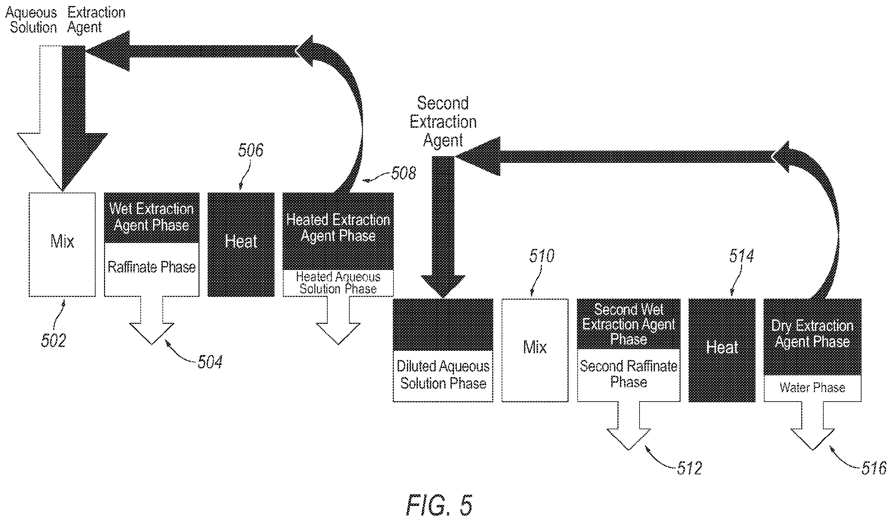

With reference to FIG. 5, a flow chart depicting another exemplary implementation of a method of extracting water from an aqueous solution is provided. The method comprises:
(a-7) mixing a first extraction agent and the aqueous solution at about ambient temperature to form a first feed mixture including a wet extraction agent phase and a raffinate phase (502), wherein the aqueous solution comprises a concentration of sodium chloride;
(b-7) removing at least a portion of the raffinate phase from the first feed mixture (504);
(c-7) heating the wet extraction agent phase to a temperature of from about 35 °C to about 130 °C to form a second feed mixture including a heated extraction agent phase and a heated aqueous solution phase (506);
(d-7) removing at least a portion of the heated extraction agent phase from the second feed mixture to provide a diluted aqueous solution phase (508);
(e-7) mixing the diluted aqueous solution phase with a second extraction agent to form a second wet extraction agent phase and a second raffinate phase (510);
(f-7) removing at least a portion of the second raffinate phase to form a concentrated wet extraction agent phase (512);
(g-7) heating the concentrated wet extraction agent phase to a temperature of from about 35 °C to about 130 °C to form a dry extraction agent phase and a water phase (514); and
(h-7) recovering the water phase (516),
wherein the water phase has a concentration of sodium chloride that is less than the concentration of sodium chloride in the aqueous solution.

In some implementations, step (a-7) comprises mixing the first extraction agent and the aqueous solution at a volume ratio of from about 5:1 to about 1:5. In other implementations, step (a-7) comprises mixing the first extraction agent and the aqueous solution at a volume ratio of from about 3:1 to about 1:3. In some implementations, step (a-7) comprises mixing the first extraction agent and the aqueous solution at a volume ratio of from about 2:1 to about 1:2. For example, step (a-7) comprises mixing the first extraction agent and the aqueous solution at a volume ratio of from about 1.5:1 to about 1:1.5. And, in some implementations, step (a-7) comprises mixing the first extraction agent and the aqueous solution at a volume ratio of about 1:1.

In some implementations, step (a-7) comprises mixing the first extraction agent and the aqueous solution for a period of from about 3 seconds to about 5 minutes. In other implementations, step (a-7) comprises mixing the first extraction agent and the aqueous solution for a period of from about 30 seconds to about 3 minutes. In some implementations, step (a-7) comprises mixing the first extraction agent and the aqueous solution for a period of from about 30 seconds to about 2 minutes. In some implementations, step (a-7) comprises mixing the first extraction agent and the aqueous solution for a period of from about 30 seconds to about 1.5 minutes. In some implementations, step (a-7) comprises mixing the first extraction agent and the aqueous solution for a period of from about 5 seconds to about 2 minutes. In some implementations, step (a-7) comprises mixing the first extraction agent and the aqueous solution for a period of from about 5 seconds to about 1.5 minutes. And, in some implementations, step (a-7) comprises mixing the first extraction agent and the aqueous solution for a period of about 1 minute.

In some implementations, the first extraction agent has a density and the aqueous solution has a density, and the density of the first extraction agent is less than the density of the aqueous solution. In other implementations, the first extraction agent has a density and the aqueous solution has a density, and the density of the first extraction agent is greater than the density of the aqueous solution.

The first extraction agent may comprise any extraction agent as described herein. In some implementations, the first extraction agent comprises a co-solvent as described herein.

The aqueous solution may be any aqueous solution as described herein. The aqueous solution may have any concentration of sodium chloride as described herein. For example, the aqueous solution may comprise a concentration of sodium chloride of from about 350 mg/L to about 40,000 mg/L. In some implementations, the aqueous solution comprises a concentration of TDS. The aqueous solution may have any concentration of TDS as described herein.

In some implementations, the aqueous solution has a concentration of sodium chloride of greater than about 8,500 mg/L. For example, the aqueous solution may have a concentration of sodium chloride of 10,000 mg/L to about 50,000 mg/L. In some implementations, the aqueous solution has a concentration of sodium chloride of 15,000 mg/L to about 45,000 mg/L. In some implementations, the aqueous solution has a concentration of sodium chloride of 20,000 mg/L to about 40,000 mg/L. In some implementations, the aqueous solution has a concentration of sodium chloride of from about 27,000 mg/L to about 37,000 mg/L.

In some implementations, step (b-7) comprises removing from about 50% to about 100% by volume of the raffinate phase from the first feed mixture. For example, step (b-2) may comprise removing from about 80% to about 100% by volume of the raffinate phase from the first feed mixture. In other implementations, step (b-7) comprises removing from about 70% to about 100% by volume of the raffinate phase from the first feed mixture. And, in some implementations, step (b-7) comprises removing about 100% by volume of the raffinate phase from the first feed mixture.

In some implementations, step (c-7) comprises heating the wet extraction agent phase to a temperature of from about 40 °C to about 110 °C (e.g., from about 45 °C to about 90 °C, from about 50 °C to about 85 °C, from about 60 °C to about 80 °C, or from about 70 °C to about 90 °C).

In some implementations, step (d-7) comprises
(d-7a) recycling at least a portion of the heated extraction agent removed from the second feed mixture for use as extraction agent in mixing step (a-7). In this manner, the method further reduces costs associated with the extraction process.

In some implementations, step (e-7) comprises reducing the temperature of the diluted aqueous solution phase by from about 10 °C to about 60 °C prior to mixing with the second extraction agent. In some implementations, step (e-7) comprises reducing the temperature of the diluted aqueous solution phase by from about 15 °C to about 45 °C prior to mixing with the second extraction agent. For example, step (e-7) may comprise reducing the temperature of the diluted aqueous solution phase by from about 15 °C to about 35 °C prior to mixing with the second extraction agent. In some implementations, step (e-7) comprises reducing the temperature of the diluted aqueous solution phase by from about 25 °C to about 45 °C prior to mixing with the second extraction agent. And, in some implementations, step (e-7) comprises reducing the temperature of the diluted aqueous solution phase to about ambient temperature prior to mixing with the second extraction agent.

The second extraction agent may comprise any extraction agent as described herein. In some implementations, the second extraction agent comprises a co-solvent as described herein. In some implementations, the second extraction agent and the first extraction agent are the same. In other implementations, the second extraction agent and the first extraction agent are different.

In some implementations, step (f-7) comprises removing from about 50% to about 100% by volume of the second raffinate phase. For example, step (f-7) may comprise removing from about 75% to about 90% by volume of the second raffinate phase. In other implementations, step (f-7) comprises removing from about 80% to about 100% by volume of the second raffinate phase from the first feed mixture. In some implementations, step (f-7) comprises removing from about 70% to about 100% by volume of the second raffinate phase. And, in some implementations, step (f-7) comprises removing about 100% by volume of the second raffinate phase.

In some implementations, step (g-7) comprises heating the concentrated wet extraction agent phase to a temperature of from about 40 °C to about 110 °C (e.g., from about 45 °C to about 90 °C, from about 50 °C to about 85 °C, from about 60 °C to about 80 °C, or from about 70 °C to about 90 °C).

The water phase has a concentration of sodium chloride that is less than the concentration of sodium chloride in the aqueous solution. The water phase may have any concentration of sodium chloride as described herein. For example, the water phase may have a concentration of sodium chloride that is from about 70% to about 90% less than the concentration of sodium chloride in the aqueous solution.

In some implementations, the water phase has a concentration of TDS. The water phase may have any concentration of TDS as described herein.

In some implementations, the method further comprises:
(i-7) recycling at least a portion of the dry extraction agent phase for use as extraction agent in mixing step (a-7). In this manner, the method further reduces costs associated with the extraction process.

In some implementations, the method further comprises:
(j-7) treating at least a portion of the water phase to remove extraction agent.

For example, step (j-7) comprises sparging or osmotically filtering the water phase to remove extraction agent from the water phase. In this manner, the method ensures that the water phase is free, or substantially free, of the extraction agent.

In one aspect, the present invention provides a method of extracting water from an aqueous solution. The method comprises:
(a-8) mixing an extraction agent and the aqueous solution at about ambient temperature to form a first feed mixture including a wet extraction agent phase and a raffinate phase, wherein the aqueous solution comprises a concentration of sodium chloride;
(b-8) removing from about 80% to about 100% by volume of the raffinate phase from the first feed mixture to form a concentrated wet extraction agent phase;
(c-8) heating the wet extraction agent phase to a temperature of from about 45 °C to about 90 °C to form a heated mixture including a dry extraction agent phase and a water phase, wherein the water phase comprises a concentration of sodium chloride that is from about 70% to about 99% less than the concentration of sodium chloride in the aqueous solution; and
(d-8) recycling at least a portion of the dry extraction agent phase for use as extraction agent in mixing step (a-8).

In another aspect, the present invention provides a method of extracting water from an aqueous solution. The method comprises:
(a-9) mixing an extraction agent and the aqueous solution at a volume ratio of from about 5:1 to about 1:5 at about ambient temperature to form a first feed mixture including a wet extraction agent phase and a raffinate phase, wherein the aqueous solution comprises a concentration of sodium chloride;
(b-9) removing from about 50% to about 100% by volume of the raffinate phase from the first feed mixture to form a concentrated wet extraction agent phase;
(c-9) heating the wet extraction agent phase to a temperature of from about 45 °C to about 90 °C to form a heated mixture including a dry extraction agent phase and a water phase, wherein the water phase comprises a concentration of sodium chloride that is from about 70% to about 99% less than the concentration of sodium chloride in the aqueous solution; and
(d-9) recycling at least a portion of the dry extraction agent phase for use as extraction agent in mixing step (a-9).

In one aspect, the present invention provides a method for extracting water from an aqueous solution. The method comprises:
(a-10) mixing a first extraction agent and the aqueous solution at about ambient temperature to form a first feed mixture including a wet extraction agent phase and a raffinate phase, wherein the aqueous solution comprises a concentration of sodium chloride;
(b-10) removing from about 50% to about 100% of the raffinate phase from the first feed mixture;
(c-10) heating the wet extraction agent phase to a temperature of from about 45 °C to about 90 °C to form a second feed mixture including a heated extraction agent phase and a heated aqueous solution phase;
(d-10) removing at least a portion of the heated extraction agent phase from the second feed mixture to provide a diluted aqueous solution phase;
(e-10) reducing the temperature of the diluted aqueous solution phase to about ambient temperature, and mixing the diluted aqueous solution phase with a second extraction agent to form a second wet extraction agent phase and a second raffinate phase;
(f-10) removing from about 50% to about 100% of the second raffinate phase to form a concentrated wet extraction agent phase;
(g-10) heating the concentrated wet extraction agent phase to a temperature of from about 45 °C to about 90 °C to form a dry extraction agent phase and a water phase; and
(h-10) recovering the water phase,
wherein the water phase has a concentration of sodium chloride that is less than the concentration of sodium chloride in the aqueous solution.

In one aspect, the present invention provides a method for extracting water from an aqueous solution. The method comprises:
(a-11) mixing a first extraction agent and the aqueous solution at about ambient temperature to form a first feed mixture including a wet extraction agent phase and a raffinate phase, wherein the aqueous solution comprises a concentration of TDS;
(b-11) removing at least a portion of the raffinate phase from the first feed mixture;
(c-11) heating the wet extraction agent phase to a temperature of from about 35 °C to about 130 °C to form a second feed mixture including a heated extraction agent phase and a heated aqueous solution phase;
(d-11) removing at least a portion of the heated extraction agent phase from the second feed mixture to provide a diluted aqueous solution phase;
(e-11) mixing the diluted aqueous solution phase with a second extraction agent to form a second wet extraction agent phase and a second raffinate phase;
(f-11) removing at least a portion of the second raffinate phase to form a concentrated wet extraction agent phase;
(g-11) heating the concentrated wet extraction agent phase to a temperature of from about 35 °C to about 130 °C to form a dry extraction agent phase and a water phase; and
(h-11) recovering the water phase,
wherein the water phase has a concentration of TDS that is less than the concentration of TDS in the aqueous solution.

In one aspect, the present invention provides a method for extracting water from an aqueous solution. The method comprises:
(a-12) mixing an extraction agent and the aqueous solution at about ambient temperature to form a first feed mixture including a wet extraction agent phase and a raffinate phase, wherein the aqueous solution comprises a concentration of TDS;
(b-12) removing from about 50% to about 100% by volume of the raffinate phase from the first feed mixture to form a concentrated wet extraction agent phase;
(c-12) heating the wet extraction agent phase to a temperature of from about 35 °C to about 130 °C to form a heated mixture including a dry extraction agent phase and a water phase, wherein the water phase comprises a concentration of TDS that is less than the concentration of TDS in the aqueous solution; and
(d-12) recycling at least a portion of the dry extraction agent phase for use as extraction agent in mixing step (a-12).

Any embodiment of any balancer described herein may be suitable for any implementation of any method described herein. Additionally, any embodiment of any system described herein may be suitable for any implementation of any method described herein.

Without wishing to be bound by theory, it is believed that the methods described herein require less electricity than conventional methods for extracting water from aqueous solutions. For example, the heating and/or mixing cycles associated with the methods described herein are relatively mild and require less electricity than conventional systems. Additionally, recycling the extraction agent further reduces the costs associated with the extraction process. Moreover, in applicable implementations, the formation of the balanced mixture, cooling, and subsequent heating is believed to improve the efficiency of the methods. Accordingly, the methods described herein provide efficient, and cost effective, access to water from aqueous solutions.

### V. EXAMPLES

### Example 1: Extraction Of Water From a 0.6M NaCl Solution

### General Method: The following method is an exemplary method of Example 1.

The extraction agent (100 mL) and the aqueous solution (100 mL) were mixed in a 500 mL separatory funnel at ambient temperature for about one (1) minute. A wet extraction agent phase (less dense; top layer) and a raffinate phase (more dense; bottom layer) were allowed to form and separate. The raffinate phase was removed and the wet extraction agent phase was transferred to a graduated cylinder. The wet extraction agent phase was heated at about 85 °C for about 5 minutes. The heated wet extraction agent phase reached a temperature of from about 65 °C to about 75 °C and formed a heated extraction agent phase (less dense; top layer) and a heated aqueous solution phase (more dense; bottom layer). A portion of the heated extraction agent phase was removed to provide a balanced mixture having a volume ratio of 1:1 of heated extraction agent phase to heated aqueous solution phase. The balanced mixture was allowed to cool to about 21 °C and the balanced mixture was transferred to a separatory funnel. The balanced mixture was mixed for one (1) minute. A cooled extraction agent phase (less dense; top layer) and a cooled aqueous solution phase (more dense, bottom layer) were allowed to form and separate. The cooled aqueous solution phase was removed and the cooled extraction agent phase was transferred to a graduated cylinder. The cooled extraction agent phase was heated at about 85 °C for 5 minutes. The cooled extraction agent phase reached a temperature of from about 65 °C to about 75 °C and formed a dry extraction agent phase (less dense; top layer) and a water phase (more dense; bottom layer). The water phase was recovered and its salt concentration was analyzed via gravimetric analysis.

In some General Method Runs, one or both of the extraction agent and the aqueous solution were dyed, as indicated in Table 1. Other General Method Runs were modified as indicated in the tables below.

**Aqueous solutions:** 0.6M NaCl solutions were prepared by placing 35 g of NaCl in a 1L Class B volumetric flask. Deionized water (700 mL) was added to the volumetric flask and the volumetric flask was swirled and inverted at least three times. Additional deionized water was added as necessary to reach the graduated mark of the volumetric flask. The mass of the resultant NaCl solution was determined by gravimetric analysis.

**Extraction Agents:** Dipropylamine, was used as the extraction agent. In the tables below, dipropylamine is referred to as "DPA".

**Gravimetric Analysis:** For gravimetric analysis, the recovered water phase was dried in an oven at 66 °C until the water was removed and only salt remained. The mass of the remaining salt was determined and used to calculate the salt concentration of the water phase.

**Dyes for Aqueous Solution and Extraction Agent:** For the aqueous solutions, methylene blue (CAS: 61-73-4) was used as a dye. For the extraction agent, isopropyl alcohol (CAS 67-63-0) saturated with Sudan III (CAS: 85-86-9) was used as a dye.

The methods used in extraction runs 1-12 are set forth in Table 1A below.

**Table 1A: Methods used in extraction runs 1-12.**

| **Run** # | **Volume Ratio of Balanced Mixture¹** | **Extraction Agent** | **Aqueous Solution NaCl Molarity (M)** | **Water Bath Temp (°C)** | **Description** |
|---|---|---|---|---|---|
| 1 | 1:1 | DPA | 0.601813826 | 90 | Dyed extraction agent |
| 2 | 1:1 | DPA | 0.602498289 | 85 | Dyed extraction agent and aqueous solution |
| 3 | 1:1 | DPA | 0.602156058 | 85 | Dyed extraction agent |
| 4 | 1:1 | DPA | 0.610198494 | 85 | Dyed extraction agent |
| 5 | 1:1 | DPA | 0.601471595 | 85 | No dyes |
| 6 | 1:1 | DPA | 0.602984942 | 85 | Wet extraction agent phase heated for 8 minutes instead of 5 minutes |
| 7 | 1:1 | DPA | 0.603524983 | 90 | Recycled extraction agent used (i.e., extraction agent used in a previous run and recovered in the heated extraction agent phase and/or dry extraction agent phase) |
| 8 | 1:1 | DPA | 0.608316222 | 95 | Balanced mixture formed while actively heating (i.e., portion of the heated extraction agent removed while in water bath) |
| 9 | 1:1 | DPA | 0.600901209 | 95 | - |
| 10 | 2:1 | DPA | 0.616016427 | 95 | - |
| 11 | 1:2 | DPA | 0.60523614 | 95 | - |
| 12 | 1:1 | DPA | ~0.605065024 | 95 | 500 mL of aqueous solution mixed with 500 mL of extraction agent |
| | | | | | Wet extraction agent phase heated for 8 minutes instead of 5 minutes |

| | | | | | |
|---|---|---|---|---|---|
| ¹(heated extraction agent phase : heated aqueous solution phase) | | | | | |

The results of extraction runs 1-12 are set forth in Table 1B below.

**Table 1B: Results of extraction runs 1-12.**

| **Run** # | **Water Phase Molarity (M)** | **Water Phase NaCl Conc. (mg/kg)** | **Water Phase Volume (mL)** | **Water Phase NaCl Recovered (g)** |
|---|---|---|---|---|
| 1 | 5.9518495E-03 | 347.83 | 1.1500 | 0.0004 |
| 2 | 0.012833676 | 750.00 | 0.8000 | 0.0006 |
| 3 | 0.045630846 | 2666.67 | 0.9000 | 0.0024 |
| 4 | 0.044001173 | 2571.43 | 0.7000 | 0.0020 |
| 5 | 0.021778359 | 1272.73 | 1.1000 | 0.0014 |
| 6 | 0.01818104 | 1062.50 | 1.6000 | 0.0017 |
| 7 | 0.017111567 | 1000.00 | 1.2000 | 0.0012 |
| 8 (1^{st} weigh) | 0.015400411 | 900.00 | 1.0000 | 0.0009 |
| 8 (2^{nd} Weigh) | 0.011978097 | 700.00 | 1.0000 | 0.0007 |
| 8 (3^{rd} Weigh) | 0.01026694 | 600.00 | 1.0000 | 0.0006 |
| 9 (1^{st} Weigh) | 0.005703855807 | 333.33 | 1.2000 | 0.0004 |
| 9 (2^{nd} Weigh) | 0.011407712 | 666.67 | 1.2000 | 0.0008 |
| 9 (3^{rd} Weigh) | 0.012833676 | 750.00 | 1.2000 | 0.0009 |
| 10 | 0.011978097 | 700.00 | 2.0000 | 0.0014 |
| 11 | 0.01425964 | 833.33 | 0.6000 | 0.0005 |
| 12 (1^{st} & 2^{nd} Weigh) | 0.010790122 | 1046.15 | 6.5000 | 0.0068 |
| 12 (3^{rd} Weigh) | 0.017374822 | 1015.38 | 6.5000 | 0.0066 |
| 12 (4^{th}, 5^{th}, & 6^{th} Weigh) | 0.016321803 | 953.85 | 6.5000 | 0.0062 |
| 12 (Final Weigh) | 0.016848313 | 984.62 | 6.5000 | 0.0064 |

### Conductivity Reading Compensated for Trace Extraction Agent (Run 12):

Another technique used to measure the water phase was conductivity. For accuracy, conductivity analysis was only performed on the water phase of Run 12 due to the larger volume of water phase recovered. It was believed that the presence of extraction agent in the water phase would impact the conductivity measurement of the water phase.

To compensate for the impact of the extraction agent on the conductivity of the water phase, a 3000 mg/kg NaCl solution (Solution 1) and a 3000 mg/kg NaCl solution with trace extraction agent (Solution 2) were prepared. The conductivities of Solution 1 and Solution 2 were determined in µS/cm. The following conversion factor was used: µS/cm * 0.64 = mg/L. Thus, a 3000 mg/kg NaCl solution has a theoretical conductivity of 4687.5 µS/cm.

Solution 1 was prepared in a 50 mL volumetric flask by dissolving approximately 0.15 g of NaCl in 50 mL of deionized water. A conductivity probe was placed in Solution 1 (3000 mg/kg solution) and a conductivity of 4084.9654 µS/cm was measured.

Solution 2 was prepared similarly to Solution 1 but with trace amounts of the extraction agent. Approximately 100 mL of deionized water was added to a separatory funnel and DPA was added to the funnel dropwise and shaken until two phases formed. Upon the formation of two phases, the aqueous phase was extracted. The solution was prepared in a 50 mL volumetric flask by dissolving 0.15g NaCl in 50 mL of the extracted aqueous phase. The same conductivity probe was placed in Solution 2 and a conductivity of 8820.5951 µS/cm was measured.

Therefore, the difference in conductivity between Solution 1 and Solution 2 was ~4000 µS/cm. This change in conductivity of ~4000 µS/cm was used along with the conductivity of the water phase measured in Run 12 in order to calculate the compensated conductivity of the water phase in Run 12 and its respective NaCl concentration in mg/kg.

In Run 12, the conductivity of the water phase was measured as 4296.62 µS/cm. Based on the difference in conductivity between Solutions 1 and 2 (i.e., ~4000 µS/cm) the compensated conductivity for Run 12 was: 4296.62 µS/cm - 4000 µS/cm = 296.62 µS/cm. This compensated conductivity for Run 12 results in a calculated NaCl concentration of the water phase in Run 12 of 189.84 mg/kg

### Example 2: Extraction Of Water From Simulated Seawater, Brackish Water, and Well Water

Two methods of extracting water from different aqueous solutions with different extraction agents were examined.

**Method A:** The extraction agent (100 mL) and the aqueous solution (100 mL) were mixed in a separatory funnel at ambient temperature for one (1) minute. A wet extraction agent phase (less dense; top layer) and a raffinate phase (more dense; bottom layer) were allowed to form and separate. The raffinate phase was removed and the wet extraction agent phase was transferred to a pear shaped flask. The wet extraction agent phase was heated to 80 °C for 5 minutes and the heated wet extraction agent phase formed a dry extraction agent phase (less dense; top layer) and a water phase (more dense; bottom layer). The water phase was recovered and its salt concentration was analyzed via atomic emission spectroscopy and/or gravimetric analysis. The dry extraction agent phase was suitable for reuse as extraction agent in subsequent runs.

**Method B:** The extraction agent (100 mL) and the aqueous solution (100 mL) were mixed in a separatory funnel at ambient temperature for one (1) minute. A wet extraction agent phase (less dense; top layer) and a raffinate phase (more dense; bottom layer) were allowed to form and separate. The raffinate phase was removed and the wet extraction agent phase was transferred to a graduated cylinder. The wet extraction agent phase was heated to 80 °C for 5 minutes and formed a heated extraction agent phase (less dense; top layer) and a heated aqueous solution phase (more dense; bottom layer). The heated extraction agent phase was removed while warm to provide a balanced mixture having a volume ratio of 1:1 of heated extraction agent phase to heated aqueous solution phase. The balanced mixture was cooled to ambient temperature and mixed for 1 minute. A cooled extraction agent phase (less dense; top layer) and a cooled aqueous solution phase (more dense; bottom layer) were allowed to form and separate. The cooled aqueous solution phase was removed. The cooled extraction phase was heated to 80 °C for 5 minutes and formed a dry extraction agent phase (less dense; top layer) and a water phase (more dense; bottom layer). The water phase was recovered and its salt concentration was analyzed via atomic emission spectroscopy and/or gravimetric analysis. The dry extraction agent phase and the recovered heated extraction agent phase were suitable for reuse as extraction agent in subsequent runs.

**Simulated Aqueous Solutions:** A seawater simulant was prepared having a concentration of sodium chloride of 35,064 mg/L. A brackish water simulant was prepared having a concentration of sodium of chloride of 4,090 mg/L. Additionally, various well water simulants having different salt concentrations were prepared based on various well water compositions in Egypt. The various well water simulants, along with their major ion concentrations and total dissolved solids (TDS), are set forth in Table 2A below.

**Table 2A: Well water simulant formulations.**

| | **Well Water # 1** | **Well Water # 2** | **Well Water # 3** | **Well Water # 4** | **Well Water # 5** | **Well Water # 6** | **Well Water # 7** | **Well Water # 8** |
|---|---|---|---|---|---|---|---|---|
| **Ca⁺ (mg/L)** | 43.9 | 26.3 | 65.2 | 29.8 | 498.1 | 93.2 | 583.3 | 79.7 |
| **Mg²⁺ (mg/L)** | 162.9 | 65.1 | 160.5 | 110.5 | 229.7 | 26.6 | 212.8 | 31.8 |
| **Na⁺ (mg/L)** | 446.9 | 34.7 | 275.1 | 142.7 | 1191.5 | 335.4 | 1200.0 | 1020.0 |
| **K⁺ (mg/L)** | 22.4 | 5.5 | 10.2 | 10.0 | 19.0 | 8.2 | 12.0 | 9.0 |
| **CO₃²⁻ (mg/L)** | 6 | 22 | 6 | 12 | 3.8 | 11.2 | 6.0 | 9.0 |
| **HCO₃⁻ (mg/L)** | 390.4 | 412.2 | 329.4 | 396.0 | 281.6 | 171.5 | 97.6 | 1340.2 |
| **SO₄²⁻ (mg/L)** | 404.4 | 10.6 | 196.7 | 114.6 | 1307.6 | 439.1 | 1900.0 | 1085.0 |
| **Cl⁻ (mg/L)** | 762.2 | 29.2 | 644.8 | 271.0 | 2359.4 | 355.9 | 2185.30 | 938.4 |
| **TDS (mg/L)** | 2043.9 | 399.5 | 1523.2 | 888.7 | 5712 | 1381.2 | 6157 | 3258 |

| | **Well Water # 9** | **Well Water # 10** | **Well Water # 11** |
|---|---|---|---|
| **Ca⁺ (mg/L)** | 471.0 | 465.8 | 126.7 |
| **Mg²⁺ (mg/L)** | 290.0 | 58.61 | 44.21 |
| **Na⁺ (mg/L)** | 900.0 | 800 | 720 |
| **K⁺ (mg/L)** | 23.0 | 7 | 11 |
| **CO₃²⁻(mg/L)** | 0.0 | 12 | 9 |
| **HCO₃⁻ (mg/L)** | 30.0 | 228.75 | 125.05 |
| **SO₄²⁻ (mg/L)** | 181.0 | 1964 | 1015 |
| **Cl⁻ (mg/L)** | 2900.0 | 719.86 | 668.44 |
| **TDS (mg/L)** | 4795 | 4141 | 2657 |

**Extraction Agents:** Both dipropylamine and di-iso-propylamine were used as extraction agents. In Table 4 below, dipropylamine is referred to as "DPA" and di-iso-propylamine is referred to as "DIPA".

**Atomic Absorption Analysis:** The atomic absorption analysis was performed on a Buck Scientific 210 VGP Atomic Absorption Spectrophotometer in Emission mode.

**Gravimetric Analysis:** For gravimetric analysis, the recovered water phase (or well water simulant or raffinate phase) was dried in an oven at 66 °C until the water was removed and only salt remained. The mass of the remaining salt was determined and used to calculate the salt concentration of the water phase.

The results of Example 2 (i.e., Runs 13-29) are set forth below in Table 2B.

**Table 2B: Salt removal and TDS of recovered water phases.**

| **Run #** | **Extraction Agent** | **Method** | **Simulated Aqueous Solution** | **Salt Removal (%)²** | **TDS (mg/L)³** |
|---|---|---|---|---|---|
| 13 | DPA | A | Seawater | 86.80 | 4,630 |
| 14 | DPA | B | Seawater | 98.80 | 420 |
| 15 | DIPA | A | Seawater | 78.00 | 7,700 |
| 16 | DIPA | B | Seawater | 95.72 | 1,500 |
| 17 | DPA | A | Brackish | 90.71 | 380 |
| 18 | DIPA | A | Brackish | 81.42 | 760 |
| 19 | DPA | A | Well Water 1 | 84.34 | 457.14 |
| 20 | DPA | A | Well Water 2 | 96.12 | 35.29 |
| 21 | DPA | A | Well Water 3 | 89.11 | 294.12 |
| 22 | DPA | A | Well Water 4 | 81.61 | 320.00 |
| 23 | DPA | A | Well Water 5 | 93.20 | 475.00 |
| 24 | DPA | A | Well Water 6 | 95.17 | 77.78 |
| 25 | DPA | A | Well Water 7 | 96.00 | 320 |
| 26 | DPA | A | Well Water 8 | 97.02 | 100 |
| 27 | DPA | A | Well Water 9 | 88.72 | 600 |
| 28 | DPA | A | Well Water 10 | 98.47 | 90.0 |
| 29 | DPA | A | Well Water 11 | 99.12 | 30.0 |

| | | | | | |
|---|---|---|---|---|---|
| ² Salt removal (%) represents the percentage of salt removed from the simulated aqueous solution. For seawater and brackish water simulants, salt removal (%) was calculated via atomic absorption analysis. For well water simulants, salt removal (%) was calculated via gravimetric analysis. ³ For seawater and brackish water simulants, TDS was calculated via atomic absorption analysis. For well water simulants, TDS was calculated via gravimetric analysis. | | | | | |

For each run, greater than 75% of salt was removed from the simulated aqueous solution. Moreover, Run 14 and Run 16 indicate that the balancing step may be particularly beneficial in increasing the amount of salt removed from the aqueous solutions. The results demonstrate that the methods may be suitable for extracting agricultural and/or potable water from aqueous solutions.

### Example 3: Simulated Seawater Rebalanced Extractions.

Another method of extracting water from simulated seawater with DPA as the extraction agent was examined.

### Preparation of Simulated Seawater (Aqueous Solution):

To a 1 L volumetric flask was added 38.0 g of INSTANT OCEAN^{™} salt mix and about 700 mL of deionized water. The flask was inverted and swirled until all solids were dissolved. Deionized water was then added to give a final volume of 1 L. This process was repeated to generate 5 L of aqueous solution.

### Extraction Method:

A 1:1 volume ratio of aqueous solution to extraction agent (DPA) was added to a 11,000 mL carboy on a shaker. The carboy underwent mixing/shaking for 1 min. The raffinate phase (reject solution) was removed and its volume and mass measured. The mass and volume of the wet extraction agent phase were measured, and the wet extraction agent phase was poured into a 2000 mL glass bottle into which a temperature probe was added. The bottle was placed in a 95 °C water bath and heated to a temperature of 80 °C. A portion of the heated wet extraction agent layer (top layer, reject amine) was removed to give a volume ratio of 2:1 of heated wet extraction agent phase to heated aqueous solution phase. The mixture was cooled to ambient temperature, transferred to 1L separatory funnel, and then mixed by shaking for 1 min. The mixture was allowed to settle, the aqueous solution phase was removed (recovered water 1) and its volume and mass were measured. The mass and volume of the remaining extraction agent phase (recovered extraction agent) were measured, and the extraction agent phase was transferred to a 1000 mL glass beaker. The extraction agent was heated in a 95 °C water bath until reaching a temperature of 80 °C. Using a graduated pipette, the water phase (recovered water 2) was recovered from the extraction agent.

The results of the extractions performed according to this Example 3 are set forth in Tables 3A and 3B.

**Table 3A: Results of rebalanced water extraction - Run 1.**

| **Initial Extraction 1:1 Volume Ratio** | | **Mass (g)** | **Volume (mL)** |
|---|---|---|---|
| | **Extraction Agent** | 1872.8 | 2500 |
| | **Feed Solution** | 2539.6 | 2500 |
| | **Recovered Water** 1 | - | 245 |
| **Rebalance 2:1 Volume Ratio** | **Wet Extraction Agent** | - | 490 |
| | **Reject Amine** | 382.5 | 510 |
| | **Recovered Extraction Agent** | 352.5 | 470 |
| | **Reject Water** | 189.1 | 195 |
| | **Recovered Water 2** | 41.5 | 42 |

**Table 3B: Results of rebalanced water extraction - Run 2.**

| **Initial Extraction 1:1 Volume Ratio** | | **Mass (g)** | **Volume (mL)** |
|---|---|---|---|
| | **Extraction Agent** | 1475.1 | 2000 |
| | **Simulated Seawater** | 1935.7 | 2000 |
| | **Recovered Water 1** | - | 200 |
| **Rebalance 2:1 Volume Ratio** | **Wet Extraction Agent** | - | 400 |
| | **Reject Amine** | 334.3 | 422.5 |
| | **Recovered Extraction Agent** | 235.2 | 320 |
| | **Recovered Water 1** | - | 200 |
| | **Reject Water** | 143.8 | 146 |
| | **Recovered Water 2** | 50.9 | 51.5 |

### OTHER EMBODIMENTS

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

## Claims

1. A method for extracting water from an aqueous solution comprising:
(a-1) mixing an extraction agent and the aqueous solution at about ambient temperature to form a first feed mixture comprising a wet extraction agent phase and a raffinate phase, wherein the aqueous solution comprises a concentration of sodium chloride, and wherein the extraction agent comprises:
(i) a tertiary or secondary amine having the formula N(R¹)₃, wherein each R¹ is independently hydrogen, an optionally substituted straight or branched C₁₋₂₀ alkyl, an optionally substituted C₁₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups; and/or
(ii) a di-amine having the formula (R¹)₂N-L-N(R¹)₂ wherein L is a C₁₋₁₄ bivalent, straight or branched alkylene chain, and each R¹ is independently hydrogen, an optionally substituted straight or branched C₁₋₂₀ alkyl, an optionally substituted C₁₋₁₄ mono- or bicyclic cycloalkyl, or an optionally substituted C₆₋₁₄ mono- or bicyclic aryl, wherein the alkyl, cycloalkyl, and aryl of R¹ are each optionally and independently substituted with up to two halogen or C₁₋₆ alkyl groups;
(b-1) removing at least a portion of the raffinate phase from the first feed mixture;
(c-1) heating the wet extraction agent phase to a temperature of from about 35 °C to about 130 °C to form a second feed mixture comprising a heated extraction agent phase and a heated aqueous solution phase;
(d-1) reducing the volume of the second feed mixture to provide a balanced mixture having a volume ratio of from about 5:1 to about 1:10 of heated extraction agent phase to heated aqueous solution phase;
(e-1) reducing the temperature of the balanced mixture by at least 15 °C to form a cooled mixture comprising a cooled extraction agent phase and a cooled aqueous solution phase;
(f-1) removing at least a portion of the cooled aqueous solution phase from the cooled mixture to form a concentrated extraction agent mixture; and
(g-1) heating the concentrated extraction agent mixture to a temperature of from about 35 °C to about 130 °C to form a dry extraction agent phase and a water phase, wherein the water phase comprises a concentration of sodium chloride that is less than the concentration of sodium chloride in the aqueous solution.

2. The method of claim 1, wherein step (a-1) comprises mixing a volume ratio of from about 5:1 to about 1:5 of extraction agent to aqueous solution to form the first feed mixture, wherein step (a-1) optionally comprises mixing the extraction agent and the aqueous solution for a period of from about 1 second to about 5 minutes or for a period of from about 30 seconds to about 2 minutes.

3. The method of claim 1 or claim 2, wherein the extraction agent has a density that is less than the density of the aqueous solution.

4. The method of any one of claims 1-3, wherein the extraction agent comprises methylamine; ethylamine; propylamine; isopropylamine; butylamine; sec-butylamine; iso-butylamine; tert-butylamine; amylamine; hexylamine; heptylamine; 1-methylhexylamine; octylamine; 1-ethylpentylamine; 2-ethylhexylamine; 2-ethylbutylamine; 2-ethyl-1-hexylamine;tert-octylamine; nonylamine; decylamine; dodecylamine; hexadecylamine; octadecylamine; dimethylamine; diethylamine; dipropylamine; di-iso-propylamine; dibutylamine; di-sec-butylamine; di-iso-butylamine; di-tert-butylamine; diisobutylamine; N,N-ethylcyclohexylamine; N-methylcyclohexylamine; N-methyl-tert-butylamine; N-methyl-iso-butylamine; N-methylpentylamine; di-allylamine; N-ethylmethylamine; N-iso-propylmethylamine; N-methylbutylamine; N-methyl-n-amylamine; N-ethyl-tert-butylamine; N-ethyl-sec-butylamine; N-ethylpropylamine; N-ethyl-iso-propylamine; N-ethyl-n-butylamine; dioctylamine; N-methyldodecylamine; propylbutylamine; N-ethylbenzylamine; 1,3-dimethylbutylamine; N,N-dimethyl-iso-propylamine; dimethylpropylamine; N,N-dimethyl-iso-butylamine; N,N-dimethyl-tert-butylamine; N,N-dimethylcyclohexylamine; N,N-dimethylethylamine; N,N-diethylmethylamine; triethylamine; di-iso-propylmethylamine; 2-(isopropylamino)ethanol; tripropylamine; trioctylamine; N,N-dimethylhexadecylamine; 1,8-diaminooctane; 1,12-diaminododecane; 1,3-dimethylamylamine; 2-aminopentane; N,N,5,5-tetramethyl-1,3-dioxan-2amine; bis[3-trimethoxysilyl)propyl]amine; octanoic acid; decanoic acid; hexanoic acid; tri-8-chlorooctylamine; trioctylamine; trioctadecylamine; or any combination thereof.

5. The method of any one of claims 1-4, wherein the aqueous solution comprises a concentration of sodium chloride of greater than about 8,500 mg/L.

6. The method of any one of claims 1-5, wherein step (b-1) comprises removing from about 50% to no more than 100% by volume of the raffinate phase from the first feed mixture, and wherein step (b-1) optionally comprises removing from about 80% to about 100% by volume of the raffinate phase from the first feed mixture.

7. The method of any one of claims 1-6, wherein step (c-1) comprises heating the wet extraction agent phase to a temperature of from about 45 °C to about 90 °C, and wherein step (c-1) optionally comprises heating the wet extraction agent phase to a temperature of from about 50 °C to about 85 °C.

8. The method of anyone of claims 1-7, wherein step (d-1) comprises removing a portion of the heated extraction agent phase from the second feed mixture to provide a balanced mixture having a volume ratio of from about 5:1 to about 1:10 of heated extraction agent phase to heated aqueous solution phase, and wherein step (d-1) optionally comprises removing the portion of the heated extraction agent phase from the second feed mixture to provide a balanced mixture having a volume ratio of from about 3:1 to about 1:3 of heated extraction agent phase to heated aqueous solution phase.

9. The method of anyone of claims 1-7, wherein step (d-1) comprises removing a portion of the heated aqueous solution phase from the second feed mixture to provide a balanced mixture having a volume ratio of from about 5:1 to about 1:10 of heated extraction agent phase to heated aqueous solution phase.

10. The method of any one of claims 1-9, wherein step (d-1) comprises detecting the volume of the heated extraction agent phase or the volume of heated aqueous solution phase.

11. The method of any one of claims 1-10, wherein step (e-1) comprises reducing the temperature of the balanced mixture to a temperature of from about 15 °C to about 35 °C to form the cooled mixture, and wherein step (e-1) optionally comprises reducing the temperature of the balanced mixture to about ambient temperature to form the cooled mixture.

12. The method of any one of claims 1-11, wherein step (f-1) comprises removing from about 50% to no more than 100% of the cooled aqueous solution phase from the cooled mixture, and wherein step (f-1) optionally comprises removing from about 75% to about 90% of the cooled aqueous solution phase from the cooled mixture.

13. The method of any one of claims 1-12, wherein step (g-1) comprises heating the concentrated extraction agent mixture to a temperature of from about 45 °C to about 90 °C, and wherein step (g-1) optionally comprises heating the concentrated extraction agent mixture to a temperature of from about 50 °C to about 85 °C.

14. The method of any one of claims 1-13, wherein the concentration of sodium chloride in the water phase is from about 70% to about 99% less than the concentration of sodium chloride in the aqueous solution.

15. The method of any one of claims 1-14, further comprising
(h-1) treating at least a portion of the water phase to remove extraction agent, wherein step (h-1) optionally comprises sparging or osmotically filtering the water phase to remove extraction agent from the water phase.

## Patentansprüche

1. Ein Verfahren zur Extraktion von Wasser aus einer wässrigen Lösung, das Folgendes umfasst:
(a-1) Mischen eines Extraktionsmittels und der wässrigen Lösung bei etwa Umgebungstemperatur, um eine erste Einsatzmischung zu bilden, die eine nasse Extraktionsmittelphase und eine Raffinatphase umfasst, wobei die wässrige Lösung eine Konzentration von Natriumchlorid umfasst, und wobei das Extraktionsmittel Folgendes umfasst:
(i) ein tertiäres oder sekundäres Amin mit der Formel N(R¹)₃, wobei jedes R¹ unabhängig Wasserstoff, ein optional substituiertes geradkettiges oder verzweigtes C₁₋₂₀-Alkyl, ein optional substituiertes mono- oder bicyclisches C₁₋₁₄-Cycloalkyl oder ein optional substituiertes mono- oder bicyclisches C₆₋₁₄-Aryl ist, wobei das Alkyl, Cycloalkyl und Aryl von R¹ jeweils optional und unabhängig mit bis zu zwei Halogen- oder C₁₋₆-Alkylgruppen substituiert sind; und/oder
(ii) ein Diamin mit der Formel (R¹)₂N-L-N(R¹)₂, wobei L eine zweiwertige, geradkettige oder verzweigte C₁₋₁₄-Alkylenkette ist und jedes R¹ unabhängig Wasserstoff, ein optional substituiertes geradkettiges oder verzweigtes C₁₋₂₀-Alkyl, ein optional substituiertes mono- oder bicyclisches C₁₋₁₄-Cycloalkyl oder ein optional substituiertes mono- oder bicyclisches C₆₋₁₄-Aryl ist, wobei das Alkyl, Cycloalkyl und Aryl von R¹ jeweils optional und unabhängig mit bis zu zwei Halogen- oder C₁₋₆-Alkylgruppen substituiert sind;
(b-1) Entfernen mindestens eines Anteils der Raffinatphase aus der ersten Einsatzmischung;
(c-1) Erwärmen der nassen Extraktionsmittelphase auf eine Temperatur von etwa 35 °C bis etwa 130 °C, um eine zweite Einsatzmischung zu bilden, die eine erwärmte Extraktionsmittelphase und eine erwärmte wässrige Lösungsphase umfasst;
(d-1) Reduzieren des Volumens der zweiten Einsatzmischung, um eine ausgewogene Mischung bereitzustellen, die ein Volumenverhältnis von etwa 5:1 bis etwa 1:10 der erwärmten Extraktionsmittelphase zu der erwärmten wässrigen Lösungsphase aufweist;
(e-1) Reduzieren der Temperatur der ausgewogenen Mischung um mindestens 15 °C, um eine gekühlte Mischung zu bilden, die eine gekühlte Extraktionsmittelphase und eine gekühlte wässrige Lösungsphase umfasst;
(f-1) Entfernen mindestens eines Anteils der gekühlten wässrigen Lösungsphase aus der gekühlten Mischung, um eine konzentrierte Extraktionsmittelmischung zu bilden; und
(g-1) Erwärmen der konzentrierten Extraktionsmittelmischung auf eine Temperatur von etwa 35 °C bis etwa 130 °C, um eine trockene Extraktionsmittelphase und eine Wasserphase zu bilden, wobei die Wasserphase eine Konzentration von Natriumchlorid umfasst, die geringer ist als die Konzentration von Natriumchlorid in der wässrigen Lösung.

2. Verfahren nach Anspruch 1, wobei Schritt (a-1) das Mischen eines Volumenverhältnisses von etwa 5:1 bis etwa 1:5 des Extraktionsmittels zu der wässrigen Lösung umfasst, um die erste Einsatzmischung zu bilden, wobei Schritt (a-1) optional das Mischen des Extraktionsmittels und der wässrigen Lösung für einen Zeitraum von etwa 1 Sekunde bis etwa 5 Minuten oder für einen Zeitraum von etwa 30 Sekunden bis etwa 2 Minuten umfasst.

3. Verfahren nach Anspruch 1 oder Anspruch 2, wobei das Extraktionsmittel eine Dichte aufweist, die geringer ist als die Dichte der wässrigen Lösung.

4. Verfahren nach einem der Ansprüche 1-3, wobei das Extraktionsmittel Folgendes umfasst: Methylamin; Ethylamin; Propylamin; Isopropylamin; Butylamin; sec-Butylamin; Isobutylamin; tert-Butylamin; Amylamin; Hexylamin; Heptylamin; 1-Methylhexylamin; Octylamin; 1-Ethylpentylamin; 2-Ethylhexylamin; 2-Ethylbutylamin; 2-Ethyl-1-hexylamin; tert-Octylamin; Nonylamin; Decylamin; Dodecylamin; Hexadecylamin; Octadecylamin; Dimethylamin; Diethylamin; Dipropylamin; Diisopropylamin; Dibutylamin; Di-sec-butylamin; Diisobutylamin; Di-tert-butylamin; Diisobutylamin; N,N-Ethylcyclohexylamin; N-Methylcyclohexylamin; N-Methyl-tert-butylamin; N-Methylisobutylamin; N-Methylpentylamin; Diallylamin; N-Ethylmethylamin; N-Isopropylmethylamin; N-Methylbutylamin; N-Methyl-n-amylamin; N-Ethyl-tert-butylamin; N-Ethyl-sec-butylamin; N-Ethylpropylamin; N-Ethylisopropylamin; N-Ethyl-n-butylamin; Dioctylamin; N-Methyldodecylamin; Propylbutylamin; N-Ethylbenzylamin; 1,3-Dimethylbutylamin; N,N-Dimethylisopropylamin; Dimethylpropylamin; N,N-Dimethylisobutylamin; N,N-Dimethyl-tert-butylamin; N,N-Dimethylcyclohexylamin; N,N-Dimethylethylamin; N,N-Diethylmethylamin; Triethylamin; Diisopropylmethylamin; 2-(Isopropylamino)ethanol; Tripropylamin; Trioctylamin; N,N-Dimethylhexadecylamin; 1,8-Diaminooctan; 1,12-Diaminododecan; 1,3-Dimethylamylamin; 2-Aminopentan; N,N,5,5-Tetramethyl-1,3-dioxan-2-amin; Bis[3-trimethoxysilyl)propyl]amin; Octansäure; Decansäure; Hexansäure; Tri-8-chloroctylamin; Trioctylamin; Trioctadecylamin; oder eine beliebige Kombination davon.

5. Verfahren nach einem der Ansprüche 1-4, wobei die wässrige Lösung eine Konzentration von Natriumchlorid von mehr als etwa 8500 mg/l umfasst.

6. Verfahren nach einem der Ansprüche 1-5, wobei Schritt (b-1) das Entfernen von etwa 50 bis nicht mehr als 100 Volumen-% der Raffinatphase aus der ersten Einsatzmischung umfasst und wobei Schritt (b-1) optional das Entfernen von etwa 80 bis etwa 100 Volumen-% der Raffinatphase aus der ersten Einsatzmischung umfasst.

7. Verfahren nach einem der Ansprüche 1-6, wobei Schritt (c-1) das Erwärmen der nassen Extraktionsmittelphase auf eine Temperatur von etwa 45 °C bis etwa 90 °C umfasst und wobei Schritt (c-1) optional das Erwärmen der nassen Extraktionsmittelphase auf eine Temperatur von etwa 50 °C bis etwa 85 °C umfasst.

8. Verfahren nach einem der Ansprüche 1-7, wobei Schritt (d-1) das Entfernen eines Anteils der erwärmten Extraktionsmittelphase aus der zweiten Einsatzmischung umfasst, um eine ausgewogene Mischung bereitzustellen, die ein Volumenverhältnis von etwa 5:1 bis etwa 1:10 der erwärmten Extraktionsmittelphase zu der erwärmten wässrigen Lösungsphase aufweist, und wobei Schritt (d-1) optional das Entfernen des Anteils der erwärmten Extraktionsmittelphase aus der zweiten Einsatzmischung umfasst, um eine ausgewogene Mischung bereitzustellen, die ein Volumenverhältnis von etwa 3:1 bis etwa 1:3 der erwärmten Extraktionsmittelphase zu der erwärmten wässrigen Lösungsphase aufweist.

9. Verfahren nach einem der Ansprüche 1-7, wobei Schritt (d-1) das Entfernen eines Anteils der erwärmten wässrigen Lösungsphase aus der zweiten Einsatzmischung umfasst, um eine ausgewogene Mischung bereitzustellen, die ein Volumenverhältnis von etwa 5:1 bis etwa 1:10 der erwärmten Extraktionsmittelphase zu der erwärmten wässrigen Lösungsphase aufweist.

10. Verfahren nach einem der Ansprüche 1-9, wobei Schritt (d-1) das Detektieren des Volumens der erwärmten Extraktionsmittelphase oder des Volumens der erwärmten wässrigen Lösungsphase umfasst.

11. Verfahren nach einem der Ansprüche 1-10, wobei Schritt (e-1) das Reduzieren der Temperatur der ausgewogenen Mischung auf eine Temperatur von etwa 15 °C bis etwa 35 °C umfasst, um die gekühlte Mischung zu bilden, und wobei Schritt (e-1) optional das Reduzieren der Temperatur der ausgewogenen Mischung auf etwa Umgebungstemperatur umfasst, um die gekühlte Mischung zu bilden.

12. Verfahren nach einem der Ansprüche 1-11, wobei Schritt (f-1) das Entfernen von etwa 50% bis nicht mehr als 100% der gekühlten wässrigen Lösungsphase aus der gekühlten Mischung umfasst und wobei Schritt (f-1) optional das Entfernen von etwa 75% bis etwa 90% der gekühlten wässrigen Lösungsphase aus der gekühlten Mischung umfasst.

13. Verfahren nach einem der Ansprüche 1-12, wobei Schritt (g-1) das Erwärmen der konzentrierten Extraktionsmittelmischung auf eine Temperatur von etwa 45 °C bis etwa 90 °C umfasst und wobei Schritt (g-1) optional das Erwärmen der konzentrierten Extraktionsmittelmischung auf eine Temperatur von etwa 50 °C bis etwa 85 °C umfasst.

14. Verfahren nach einem der Ansprüche 1-13, wobei die Konzentration von Natriumchlorid in der Wasserphase von etwa 70% bis etwa 99% weniger als die Konzentration von Natriumchlorid in der wässrigen Lösung beträgt.

15. Verfahren nach einem der Ansprüche 1-14, das ferner Folgendes umfasst:
(h-1) Behandeln mindestens eines Anteils der Wasserphase, um Extraktionsmittel zu entfernen, wobei Schritt (h-1) optional das Durchblasen oder osmotische Filtrieren der Wasserphase umfasst, um das Extraktionsmittel aus der Wasserphase zu entfernen.

## Revendications

1. Procédé d'extraction d'eau d'une solution aqueuse comprenant :
(a-1) le mélange d'un agent d'extraction et de la solution aqueuse à environ la température ambiante pour former un premier mélange d'alimentation comprenant une phase d'agent d'extraction humide et une phase de raffinat, la solution aqueuse comprenant une concentration de chlorure de sodium, et l'agent d'extraction comprenant :
(i) une amine tertiaire ou secondaire ayant la formule N(R¹)₃, dans laquelle chaque groupe R¹ est indépendamment un atome d'hydrogène, un groupe alkyle C₁₋₂₀ linéaire ou ramifié optionnellement substitué, un groupe cycloalkyle C₁₋₁₄ mono- ou bicyclique optionnellement substitué, ou un groupe aryle C₆₋₁₄ mono- ou bicyclique optionnellement substitué, les groupes alkyle, cycloalkyle et aryle du groupe R¹ étant chacun optionnellement et indépendamment substitué par jusqu'à deux halogènes ou groupes alkyle C₁₋₆ ; et/ou
(ii) une di-amine ayant la formule (R¹)₂N-L-N(R¹)₂, dans laquelle L est une chaîne alkylène C₁₋₁₄ bivalente, linéaire ou ramifiée, et chaque groupe R¹ est indépendamment un atome d'hydrogène, un groupe alkyle C₁₋₂₀ linéaire ou ramifié optionnellement substitué, un groupe cycloalkyle C₁₋₁₄ mono- ou bicyclique optionnellement substitué, ou un groupe aryle C₆₋₁₄ mono- ou bicyclique optionnellement substitué, les groupes alkyle, cycloalkyle et aryle du groupe R¹ étant chacun optionnellement et indépendamment substitué par jusqu'à deux halogènes ou groupes alkyle C₁₋₆ ;
(b-1) le retrait d'au moins une partie de la phase de raffinat du premier mélange d'alimentation ;
(c-1) un chauffage de la phase d'agent d'extraction humide à une température d'environ 35 °C à environ 130 °C pour former un deuxième mélange d'alimentation comprenant une phase d'agent d'extraction chauffée et une phase de solution aqueuse chauffée ;
(d-1) une réduction du volume du deuxième mélange d'alimentation pour produire un mélange équilibré ayant un rapport volumique d'environ 5:1 à environ 1:10 de la phase d'agent d'extraction chauffée à la phase de solution aqueuse chauffée ;
(e-1) une réduction de la température du mélange équilibré d'au moins 15 °C pour former un mélange refroidi comprenant une phase d'agent d'extraction refroidie et une phase de solution aqueuse refroidie ;
(f-1) le retrait d'au moins une partie de la phase de solution aqueuse refroidie du mélange refroidi pour former un mélange d'agent d'extraction concentré ; et
(g-1) un chauffage du mélange d'agent d'extraction concentré à une température d'environ 35 °C à environ 130 °C pour former une phase d'agent d'extraction sec et une phase aqueuse, la phase aqueuse comprenant une concentration de chlorure de sodium qui est inférieure à la concentration de chlorure de sodium dans la solution aqueuse.

2. Procédé selon la revendication 1, dans lequel l'étape (a-1) comprend le mélange d'un rapport volumique d'environ 5:1 à environ 1:5 de l'agent d'extraction à la solution aqueuse pour former le premier mélange d'alimentation, l'étape (a-1) comprenant optionnellement un mélange de l'agent d'extraction et de la solution aqueuse pendant une période d'environ 1 seconde à environ 5 minutes ou pendant une période d'environ 30 secondes à environ 2 minutes.

3. Procédé selon la revendication 1 ou la revendication 2, dans lequel l'agent d'extraction a une densité qui est inférieure à la densité de la solution aqueuse.

4. Procédé selon l'une quelconque des revendications 1 à 3, dans lequel l'agent d'extraction comprend de la méthylamine ; de l'éthylamine ; de la propylamine ; de l'isopropylamine ; de la butylamine ; de la sec-butylamine ; de l'iso-butylamine ; de la tert-butylamine ; de l'amylamine ; de l'hexylamine ; de l'heptylamine ; de la 1-méthylhexylamine ; de l'octylamine ; de la 1-éthylpentylamine ; de la 2-éthylhexylamine ; de la 2-éthylbutylamine ; de la 2-éthyl-1-hexylamine ; de la tertoctylamine ; de la nonylamine ; de la décylamine ; de la dodécylamine ; de l'hexadécylamine ; de l'octadécylamine ; de la diméthylamine ; de la diéthylamine ; de la dipropylamine ; de la di-iso-propylamine ; de la dibutylamine ; de la di-sec-butylamine ; de la di-iso-butylamine ; de la di-tert-butylamine ; de la diisobutylamine ; de la N,N-éthylcyclohexylamine ; de la N-méthylcyclohexylamine ; de la N-méthyl-tert-butylamine ; de la N-méthyl-iso-butylamine ; de la N-méthylpentylamine ; de la di-allylamine ; de la N-éthylméthylamine ; de la N-iso-propylméthylamine ; de la N-méthylbutylamine ; de la N-méthyl-n-amylamine ; de la N-éthyl-tert-butylamine ; de la N-éthyl-sec-butylamine ; de la N-éthylpropylamine ; de la N-éthyl-iso-propylamine ; de la N-éthyl-n-butylamine ; de la dioctylamine ; de la N-méthyldodécylamine ; de la propylbutylamine ; de la N-éthylbenzylamine ; de la 1,3-diméthylbutylamine ; de la N,N-diméthyl-iso-propylamine ; de la diméthylpropylamine ; de la N,N-diméthyl-iso-butylamine ; de la N,N-diméthyl-tert-butylamine ; de la N,N-diméthylcyclohexylamine ; de la N,N-diméthyléthylamine ; de la N,N-diéthylméthylamine ; de la triéthylamine ; de la di-iso-propylméthylamine ; du 2-(isopropylamino)éthanol ; de la tripropylamine ; de la trioctylamine ; de la N,N-diméthylhexadécylamine ; du 1,8-diaminooctane ; du 1,12-diaminododécane ; de la 1,3-diméthylamylamine ; du 2-aminopentane ; de la N,N,5,5-tétraméthyl-1,3-dioxan-2-amine ; de la bis[3-triméthoxysilyl)propyl]amine ; de l'acide octanoïque ; de l'acide décanoïque ; de l'acide hexanoïque ; de la tri-8-chlorooctylamine ; de la trioctylamine ; de la trioctadécylamine ; ou n'importe quelle combinaison de ceux-ci.

5. Procédé selon l'une quelconque des revendications 1 à 4, dans lequel la solution aqueuse comprend une concentration de chlorure de sodium supérieure à environ 8 500 mg/L.

6. Procédé selon l'une quelconque des revendications 1 à 5, dans lequel l'étape (b-1) comprend un retrait d'environ 50 % à un maximum de 100 % en volume de la phase de raffinat du premier mélange d'alimentation, et dans lequel l'étape (b-1) comprend optionnellement un retrait d'environ 80 % à environ 100 % en volume de la phase de raffinat du premier mélange d'alimentation.

7. Procédé selon l'une quelconque des revendications 1 à 6, dans lequel l'étape (c-1) comprend un chauffage de la phase d'agent d'extraction humide à une température d'environ 45 °C à environ 90 °C, et dans lequel l'étape (c-1) comprend optionnellement un chauffage de la phase d'agent d'extraction humide à une température d'environ 50 °C à environ 85 °C.

8. Procédé selon l'une quelconque des revendications 1 à 7, dans lequel l'étape (d-1) comprend le retrait d'une partie de la phase d'agent d'extraction chauffée du deuxième mélange d'alimentation pour produire un mélange équilibré ayant un rapport volumique d'environ 5:1 à environ 1:10 de la phase d'agent d'extraction chauffée à la phase de solution aqueuse chauffée, et dans lequel l'étape (d-1) comprend optionnellement un retrait de la partie de la phase d'agent d'extraction chauffée du deuxième mélange d'alimentation pour produire un mélange équilibré ayant un rapport volumique d'environ 3:1 à environ 1:3 de la phase d'agent d'extraction chauffée à la phase de solution aqueuse chauffée.

9. Procédé selon l'une quelconque des revendications 1 à 7, dans lequel l'étape (d-1) comprend le retrait d'une partie de la phase de solution aqueuse chauffée du deuxième mélange d'alimentation pour produire un mélange équilibré ayant un rapport volumique d'environ 5:1 à environ 1:10 de la phase d'agent d'extraction chauffée à la phase de solution aqueuse chauffée.

10. Procédé selon l'une quelconque des revendications 1 à 9, dans lequel l'étape (d-1) comprend une détection du volume de la phase d'agent d'extraction chauffée ou du volume de la phase de solution aqueuse chauffée.

11. Procédé selon l'une quelconque des revendications 1 à 10, dans lequel l'étape (e-1) comprend une réduction de la température du mélange équilibré jusqu'à une température d'environ 15 °C à environ 35 °C pour former le mélange refroidi, et dans lequel l'étape (e-1) comprend optionnellement une réduction de la température du mélange équilibré à environ la température ambiante pour former le mélange refroidi.

12. Procédé selon l'une quelconque des revendications 1 à 11, dans lequel l'étape (f-1) comprend un retrait d'environ 50 % à un maximum de 100 % de la phase de solution aqueuse refroidie du mélange refroidi, et dans lequel l'étape (f-1) comprend optionnellement un retrait d'environ 75 % à environ 90 % de la phase de solution aqueuse refroidie du mélange refroidi.

13. Procédé selon l'une quelconque des revendications 1 à 12, dans lequel l'étape (g-1) comprend un chauffage du mélange d'agent d'extraction concentré à une température d'environ 45 °C à environ 90 °C, et dans lequel l'étape (g-1) comprend optionnellement un chauffage du mélange d'agent d'extraction concentré à une température d'environ 50 °C à environ 85 °C.

14. Procédé selon l'une quelconque des revendications 1 à 13, dans lequel la concentration de chlorure de sodium dans la phase aqueuse est d'environ 70 % à environ 99 % inférieure à la concentration de chlorure de sodium dans la solution aqueuse.

15. Procédé selon l'une quelconque des revendications 1 à 14, comprenant en outre :
(h-1) le traitement d'au moins une partie de la phase aqueuse pour retirer l'agent d'extraction, l'étape (h-1) comprenant optionnellement un barbotage ou une filtration osmotique de la phase aqueuse pour retirer l'agent d'extraction de la phase aqueuse.
